# EUROPEAN PATENT APPLICATION

(11) **EP 4 694 143 A1**
(43) Date of publication of application: **11.02.2026**
(21) Application number: 24814106.1
(22) Date of filing: 06.05.2024
(51) Int. Cl.: H04N 21/2343

(54) **DECODING METHOD AND ELECTRONIC DEVICE**

(30) Priority: 30.05.2023 CN 202310628717
(71) Applicant: Huawei Technologies Co., Ltd., Shenzhen, Guangdong 518129 (CN)
(72) Inventor: XIA, Bingyin, Shenzhen, Guangdong 518129 (CN); MENG, Xianbo, Shenzhen, Guangdong 518129 (CN); LI, Jiawei, Shenzhen, Guangdong 518129 (CN); WANG, Zhe, Shenzhen, Guangdong 518129 (CN)
(74) Representative: Eisenführ Speiser
(86) International application number: PCT/CN2024/091179
(87) International publication number: WO 2024/244901

(57) **Abstract**

Embodiments of this application provide a decoding method and an electronic device. The method includes: first receiving a first bitstream, where the first bitstream includes a model identifier and a second bitstream, and the second bitstream is generated based on an encoded signal; obtaining model information when a value of the model identifier is a preset identifier value; then performing model reconstruction based on the model information, to obtain a decoding model; and decoding the second bitstream based on the decoding model, to obtain a reconstructed signal. In this way, a decoding model at a decoder side and an encoding model at an encoder side are synchronously updated, or a decoding model used for decoding at a decoder side and an encoding model used for encoding at an encoder side are synchronously switched.

## Description

This application claims priority to Chinese Patent Application No. 202310628717.X, filed with the China National Intellectual Property Administration on May 30, 2023 and entitled "DECODING METHOD AND ELECTRONIC DEVICE", which is incorporated herein by reference in its entirety.

### TECHNICAL FIELD

Embodiments of this application relate to the encoding and decoding field, and in particular, to a decoding method and an electronic device.

### BACKGROUND

With the development of high-definition audio and video and three-dimensional (three-dimensional, 3D) audio and video, people have increasingly high requirements for quality of the audio and video. As a result, an amount of audio and video data in a media application increases rapidly. This also makes audio and video compression an indispensable part in media applications such as a media communication application and a media broadcasting application.

In conventional audio and video compression technologies, original audio and video data is compressed based on basic principles of signal processing and correlation between signals in time and space, to reduce an amount of data and facilitate transmission or storage of the data. With the continuous development and maturity of artificial intelligence (Artificial Intelligence, AI) technologies, the AI technologies are also introduced to the audio and video encoding and decoding field, improving coding performance.

After a coding standard is standardized, a related AI model is usually not updated or iterated. This affects long-term evolution of the coding standard and performance optimization.

### SUMMARY

In view of this, this application provides a decoding method and an electronic device.

According to a first aspect, an embodiment of this application provides an encoding method applied to a first electronic device. The method includes: first obtaining a to-be-encoded signal; and then generating a first bitstream, where the first bitstream includes a second bitstream and a model identifier, the second bitstream is obtained by encoding the to-be-encoded signal based on an encoding model, a value of the model identifier is a preset identifier value, the preset identifier value indicates a second electronic device to obtain model information of a decoding model, and the decoding model corresponds to the encoding model.

In this way, the first electronic device sets the value of the model identifier in the first bitstream to the preset identifier value, to indicate the second electronic device to obtain the model information of the decoding model. After the first bitstream is transmitted to the second electronic device, the second electronic device may obtain the model information of the decoding model based on the preset identifier value, to synchronously update the decoding model of the second electronic device and the encoding model of the first electronic device, or synchronously switch the decoding model used by the second electronic device for decoding and the encoding model used by the first electronic device for encoding. Therefore, long-term evolution of a coding standard and coding performance optimization are facilitated.

For example, both the encoding model and the decoding model may be implemented by using a neural network. Therefore, the encoding model may also be referred to as an AI encoding model, and the decoding model may also be referred to as an AI decoding model.

In a possible manner, the encoding model and the decoding model are two independent models. In this case, the encoding model and the decoding model may be jointly trained. In a possible manner, the encoding model and the decoding model are two parts of a model.

It should be understood that when the encoding model and the decoding model are two parts of a model, the preset identifier value may indicate the second electronic device to obtain model information of the encoding model and the model information of the decoding model. In this way, the second electronic device can reconstruct the encoding model based on the model information of the encoding model, and reconstruct the decoding model based on the model information of the decoding model. This application is described by using an example in which the encoding model and the decoding model are two independent models.

In a possible manner, an identifier (namely, a flag) or a field may be added to the first bitstream as the model identifier. In a possible manner, an existing field in the first bitstream may be reused, and the existing field is used as the model identifier. This is not limited in this application. When the existing field in the first bitstream is reused, and the existing field is used as the model identifier, in this application, decoding syntax does not need to be changed, that is, model updating or switching is implemented while maintaining backward compatibility.

For example, the to-be-encoded signal may include but is not limited to an audio signal, an image, and a video signal.

According to the first aspect, the first bitstream further includes a third bitstream, and the third bitstream is generated based on the model information of the decoding model. The preset identifier value may represent that the first bitstream includes the third bitstream. In this case, the preset identifier value may indicate the second electronic device to obtain the model information of the decoding model from the first bitstream. In this way, the first electronic device can transmit the model information of the decoding model to the second electronic device, so that the second electronic device reconstructs, based on the model information of the decoding model, the decoding model used for decoding.

According to the first aspect or any one of the foregoing implementations of the first aspect, the method further includes: generating the third bitstream based on the model information of the decoding model; and generating the first bitstream includes: encapsulating the second bitstream and the third bitstream, to obtain the first bitstream.

According to the first aspect or any one of the foregoing implementations of the first aspect, the first bitstream further includes index information corresponding to the model information of the decoding model. The preset identifier value represents that the first bitstream includes the index information corresponding to the model information of the decoding model. In this case, the preset identifier value may indicate the second electronic device to obtain the model information of the decoding model from a third electronic device based on the index information parsed out from the first bitstream.

In this way, the first electronic device needs to transmit only the index information corresponding to the model information of the decoding model. Compared with transmitting the model information of the decoding model, transmitting only the index information corresponding to the model information of the decoding model has lower bit rate overheads, and can reduce a bandwidth requirement.

For example, the index information may be a uniform resource locator (Uniform Resource Locator, URL). This is not limited in this application.

According to the first aspect or any one of the foregoing implementations of the first aspect, generating the first bitstream includes: obtaining the first bitstream based on the second bitstream and the index information corresponding to the model information of the decoding model.

According to the first aspect or any one of the foregoing implementations of the first aspect, the preset identifier value further represents that the model information of the decoding model is stored in a preset storage location in the third device. In this case, the preset identifier value may indicate the second electronic device to obtain the model information of the decoding model from the preset storage location in the third electronic device, where the preset storage location may be a location agreed upon in advance by the first electronic device and the second electronic device.

In this way, the first electronic device does not need to transmit the index information corresponding to the model information of the decoding model, and does not need to transmit the model information of the decoding model either. Therefore, bit rate overheads are lower, and a bandwidth requirement is lower.

It should be noted that, it is assumed that a manner in which the second electronic device obtains the model information from the first bitstream is referred to as a first manner; a manner in which the second electronic device obtains the model information based on the index information corresponding to the model information from the first bitstream is referred to as a second manner; and a manner in which the second electronic device obtains the model information from the preset storage location in the third electronic device is referred to as a third manner. In a possible manner, the first electronic device and the second electronic device may agree in advance on a manner in which the second electronic device obtains the model information of the decoding model. In encoding and decoding processes, when the first electronic device and the second electronic device agree on the first manner, the first electronic device may generate the third bitstream based on the model information of the decoding model, and encapsulate the second bitstream and the third bitstream, to obtain the first bitstream. In encoding and decoding processes, when the first electronic device and the second electronic device agree on the second manner, the first electronic device may generate the first bitstream based on the second bitstream and the index information corresponding to the model information of the decoding model. In encoding and decoding processes, when the first electronic device and the second electronic device agree on the third manner, the first electronic device may generate the first bitstream based on the second bitstream.

In a possible manner, in encoding and decoding processes, the first electronic device may select one manner from the first manner, the second manner, and the third manner as a target manner. When the target manner is the first manner, the first electronic device may generate the third bitstream based on the model information of the decoding model, and encapsulate the second bitstream and the third bitstream, to obtain the first bitstream. When the target manner is the second manner, the first electronic device may generate the first bitstream based on the second bitstream and the index information corresponding to the model information of the decoding model. When the target manner is the third manner, the first electronic device may generate the first bitstream based on the second bitstream.

According to the first aspect or any one of the foregoing implementations of the first aspect, the model identifier is an elementary stream (Elementary Stream, ES) field.

For example, an ES encapsulation format may include a plurality of fields, and the ES field may be a field included in the ES encapsulation format. In other words, an ES packet may be obtained by encapsulating data according to an ES encapsulation format. The ES packet may include a plurality of fields, and the ES field may be a field in the ES packet.

According to the first aspect or any one of the foregoing implementations of the first aspect, when a target bitstream type of the first bitstream is a type of a bitstream encapsulated according to a target container format or a type of a bitstream encapsulated according to a target transport protocol, the model identifier is a field in the target container format. In this way, the second electronic device can obtain the value of the model identifier without parsing an ES packet.

For example, the target container format includes but is not limited to a transport stream (Transport Stream, TS) format, an MP4 format, and the like. This is not limited in this application.

For example, the target container format may include a plurality of fields, and the field in the target container format may be a field included in the target container format. In other words, an encapsulated packet may be obtained by encapsulating data according to the target container format. The encapsulated packet may include a plurality of fields, and the field in the target container format may be a field in the encapsulated packet obtained through encapsulation according to the target container format. For example, when the target container format is the TS format/MP4 format, the field in the target container format may be a field in a TS packet.

For example, the target transport protocol may include a plurality of types, for example, a streaming media-based transport protocol (HTTP Live Streaming, HLS) and a real-time transport protocol (Real-time Transport Protocol, RTP). This is not limited in this application.

According to the first aspect or any one of the foregoing implementations of the first aspect, when a target bitstream type of the first bitstream is a type of a bitstream encapsulated according to a target transport protocol, the model identifier is a field in the target transport protocol. In this way, the second electronic device can obtain the value of the model identifier without decapsulating the first bitstream according to a target container format and without parsing the ES packet.

For example, an encapsulation format of the target transport protocol may include a plurality of fields, and the field in the target transport protocol may be a field included in the encapsulation format of the target transport protocol. In other words, an encapsulated packet may be obtained by encapsulating data according to an encapsulation format of the target transport protocol. The encapsulated packet may include a plurality of fields, and the field in the target transport protocol may be a field in the encapsulated packet obtained through encapsulation according to the target transport protocol.

According to the first aspect or any one of the foregoing implementations of the first aspect, the method further includes: determining whether the decoding model is an updated decoding model; and when the decoding model is the updated decoding model, setting the value of a model identifier to the preset identifier value. In this case, the preset identifier value indicates the second electronic device to obtain model information of the updated decoding model. In this case, the encoding model may not be updated, and only the decoding model is updated (for example, the decoding model is optimized). In this case, the updated decoding model corresponds to the encoding model.

In a possible case, both the encoding model and the decoding model are updated. In this case, the method further includes: determining whether both the encoding model and the decoding model are updated; and encoding the to-be-encoded signal based on the encoding model, to obtain the second bitstream includes: when it is determined that both the encoding model and the decoding model are updated, encoding the to-be-encoded signal based on an updated encoding model, to obtain a second bitstream. In this case, the preset identifier value indicates the second electronic device to obtain the model information of the updated decoding model, where the updated decoding model corresponds to the updated encoding model.

In a possible case, the first electronic device includes a plurality of encoding models and a plurality of decoding models (the encoding models one-to-one correspond to the decoding models). The method further includes: determining whether to switch an encoding model used for encoding; and when it is determined that the encoding model used for encoding is switched, encoding the to-be-encoded signal based on a switched encoding model, to obtain a second bitstream. In this case, the preset identifier value indicates the second electronic device to obtain model information of a switched decoding model, where the switched decoding model corresponds to the switched encoding model.

It should be understood that, regardless of whether the encoding model and the decoding model in the first electronic device are updated (or whether the decoding model is updated), and whether an encoder in the first electronic device switches the encoding model used for encoding, the first electronic device may set the value of the model identifier in the first bitstream to the preset identifier value. In this case, the preset identifier value may represent a type of a decoding model (or an encoding model). Correspondingly, after obtaining the preset identifier value, the second electronic device determines whether a decoding model of a type corresponding to the preset identifier value exists in the second electronic device; and when the decoding model of the type corresponding to the preset identifier value does not exist, obtains the model information of the decoding model.

According to the first aspect or any one of the foregoing implementations of the first aspect, encapsulating the second bitstream and the third bitstream, to obtain the first bitstream includes: encapsulating the second bitstream and the third bitstream according to a target bitstream type, to obtain the first bitstream.

It should be noted that, in a possible manner, the first electronic device and the second electronic device may agree on the target bitstream type in advance. In this way, the first electronic device encapsulates the second bitstream and the third bitstream according to the target bitstream type, and the second electronic device decapsulates the first bitstream according to the target bitstream type.

In a possible manner, in an encoding process, the first electronic device may select a bitstream type from a plurality of bitstream types as a target bitstream type as required. Correspondingly, the second electronic device identifies a bitstream type (that is, the target bitstream type) of the first bitstream, and then decapsulates the first bitstream according to the target bitstream type.

According to the first aspect or any one of the foregoing implementations of the first aspect, the target bitstream type is an ES type, and encapsulating the second bitstream and the third bitstream according to the target bitstream type, to obtain the first bitstream includes: encapsulating the third bitstream and the second bitstream into a first ES packet, and using the first ES packet as the first bitstream. In other words, the first bitstream is an ES stream, and the second bitstream and the third bitstream are encapsulated into a same ES packet for transmission. In this way, after the ES packet is obtained, the ES packet can be directly transmitted without being encapsulated according to the target container format or according to the target transport protocol, thereby reducing bit rate overheads and reducing a bandwidth requirement. In addition, the second bitstream and the third bitstream are encapsulated into the same ES packet, so that the second bitstream and the third bitstream can be sent on a same channel, thereby reducing transmission complexity.

According to the first aspect or any one of the foregoing implementations of the first aspect, the target bitstream type is a type of a bitstream encapsulated according to a target container format, and encapsulating the second bitstream and the third bitstream according to the target bitstream type, to obtain the first bitstream includes: encapsulating the third bitstream and the second bitstream into a second ES packet; and encapsulating the second ES packet according to the target container format, to obtain the first bitstream. The ES packet may be divided into a plurality of small packets, and then the small packets are encapsulated according to the target container format. This facilitates bitstream delivery of a bitstream delivery device and synchronous audio and video control.

For example, when the target container format is a TS format, the first bitstream is a TS stream, and the second bitstream and the third bitstream may be encapsulated into a same ES packet, and the ES packet is encapsulated into one TS stream for transmission. When the target container format is an MP4 format, the first bitstream is an MP4 stream, and the second bitstream and the third bitstream are encapsulated into a same ES packet, and the ES packet is encapsulated into one TS stream of MP4.

According to the first aspect or any one of the foregoing implementations of the first aspect, the target bitstream type is a type of a bitstream encapsulated according to a target container format, and encapsulating the second bitstream and the third bitstream according to the target bitstream type, to obtain the first bitstream includes: encapsulating the third bitstream into a third ES packet, and using the second bitstream as a fourth ES packet; and encapsulating the third ES packet and the fourth ES packet according to the target container format, setting a type of the third ES packet to a preset type, and setting a type of the fourth ES packet to a media type, to obtain the first bitstream. In other words, the second bitstream and the third bitstream are encapsulated into different ES packets for transmission. In this way, compared with encapsulating the second bitstream and the third bitstream into a same ES packet, the second electronic device does not need to split the ES packet to parse out the second bitstream and the third bitstream, thereby reducing complexity of a parsing process.

For example, the media type may include but is not limited to an audio type, a video type, and an image type.

According to the first aspect or any one of the foregoing implementations of the first aspect, the preset type is a metadata type. In other words, the third bitstream is encapsulated as metadata.

According to the first aspect or any one of the foregoing implementations of the first aspect, the target bitstream type is a type of a bitstream encapsulated according to a target container format, and encapsulating the second bitstream and the third bitstream according to the target bitstream type, to obtain the first bitstream includes: encapsulating the third bitstream into a fifth ES packet, and using the second bitstream as a sixth ES packet; encapsulating the fifth ES packet according to the target container format, and setting a type of the fifth ES packet to a preset type, to obtain a fourth bitstream; encapsulating the sixth ES packet according to the target container format, and setting a type of the sixth ES packet to a media type, to obtain a fifth bitstream; and combining the fourth bitstream and the fifth bitstream, to obtain the first bitstream. In other words, the second bitstream and the third bitstream are separately encapsulated according to the target container format. For example, the second bitstream and the third bitstream are encapsulated into two TS streams. In this way, compared with encapsulating the second bitstream and the third bitstream into a same TS stream, the second electronic device does not need to split the TS stream to parse out the second bitstream and the third bitstream, thereby reducing complexity of a parsing process.

It should be noted that combining the fourth bitstream and the fifth bitstream may be understood as combining only the fourth bitstream and the fifth bitstream.

According to the first aspect or any one of the foregoing implementations of the first aspect, the target bitstream type is a type of a bitstream encapsulated according to a target transport protocol, and encapsulating the second bitstream and the third bitstream according to the target bitstream type, to obtain the first bitstream includes: encapsulating the third bitstream into a seventh ES packet, and using the second bitstream as an eighth ES packet; encapsulating the seventh ES packet according to a target container format, and setting a type of the seventh ES packet to a preset type, to obtain a sixth bitstream; encapsulating the eighth ES packet according to the target container format, and setting a type of the eighth ES packet to a media type, to obtain a seventh bitstream; and encapsulating the sixth bitstream and the seventh bitstream according to the target transport protocol, to obtain the first bitstream. In other words, after the second bitstream and the third bitstream are separately encapsulated according to the target container format, and then encapsulation is performed according to the target transport protocol. Second bitstreams with different reconstruction precision (which may be understood as precision of reconstructed signals obtained by decoding the second bitstream) may be generated. In this way, the bitstream delivery device distributes, based on a bandwidth, the first bitstream including the second bitstreams with different reconstruction precision, thereby ensuring smoothness of playing the reconstructed signal.

It should be noted that, the first bitstream obtained by combining the fourth bitstream and the fifth bitstream includes only the fourth bitstream and the fifth bitstream. In addition to the sixth bitstream and the seventh bitstream, the first bitstream obtained by encapsulating the fourth bitstream and the fifth bitstream according to the target transport protocol further includes a field included in an encapsulation format of the target transport protocol.

According to the first aspect or any one of the foregoing implementations of the first aspect, the first bitstream further includes an index file, the index file includes index information of the sixth bitstream and index information of the seventh bitstream, and the index information of the sixth bitstream in the index file is before the index information of the seventh bitstream. In this way, the second electronic device can first obtain the model information used to reconstruct the decoding model, so that a delay of decoding a second bitstream corresponding to each frame of the signal can be shortened.

For example, the target bitstream type is a type of a bitstream encapsulated according to HLS, and the first bitstream may be an HLS stream.

According to the first aspect or any one of the foregoing implementations of the first aspect, the first bitstream further includes an index file, and attribute information of an initialization tag in the index file includes index information of the sixth bitstream. This can ensure that a decoder can decode the second bitstream after determining that reconstruction of the decoding model is completed and the decoding model is read (that is, initialization of the decoder).

For example, the target bitstream type is a type of a bitstream encapsulated according to HLS, and the first bitstream may be an HLS stream.

According to the first aspect or any one of the foregoing implementations of the first aspect, the to-be-encoded signal includes M frames, there are M second bitstreams, the model information includes N information groups, the third bitstream includes N sub-bitstreams, the N information groups one-to-one correspond to the N sub-bitstreams, first ES packets include N ninth ES packets and M-N tenth ES packets, M and N are positive integers, and M is greater than or equal to N; and encapsulating the third bitstream and the second bitstream into the first ES packet includes: encapsulating the N sub-bitstreams and N second bitstreams into N ninth ES packets, and using other M-N second bitstreams as the M-N tenth ES packets, where the ninth ES packet includes one sub-bitstream and one second bitstream, and the tenth ES packet includes one second bitstream.

One second bitstream is obtained by encoding one frame of the to-be-encoded signal based on the encoding model. N may be determined based on a data amount of the model information (or encoded data of the model information), a network bandwidth, and encoded data of an audio signal. In this way, smoothness of playing the reconstructed signal by the second electronic device can be ensured.

According to the first aspect or any one of the foregoing implementations of the first aspect, the first bitstream further includes an index file, and the index file includes index information corresponding to the model information of the decoding model.

For example, the target bitstream type is a type of a bitstream encapsulated according to HLS, and the first bitstream may be an HLS stream.

According to the first aspect or any one of the foregoing implementations of the first aspect, obtaining the first bitstream based on the second bitstream and the index information corresponding to the model information of the decoding model includes: generating an eighth bitstream based on the index information corresponding to the model information of the decoding model; and encapsulating the second bitstream and the eighth bitstream, to obtain the first bitstream. This is similar to a manner of encapsulating the second bitstream and the third bitstream to obtain the first bitstream. Details are not described herein again.

According to the first aspect or any one of the foregoing implementations of the first aspect, the third bitstream includes description information of the model information and the model information, or the third bitstream includes description information of the model information and encoded data of the model information.

According to the first aspect or any one of the foregoing implementations of the first aspect, the model information includes model structure information or a model parameter.

The model structure information may be network structure information of a neural network, and the network structure information may include a connection relationship between network layers. The decoding model may include a plurality of types of network layers (for example, a convolutional layer, a fully connected layer, an RNN (Recurrent Neural Network, recurrent neural network) layer, and an activation layer), and there may be one or more network layers of each type.

For example, the model parameter may be a network parameter of a neural network, and the network parameter may be a weight matrix and a bias matrix that correspond to a network layer. The weight matrix includes weight vectors of a plurality of network layers, and the bias matrix includes bias vectors of the plurality of network layers. Each network layer may include one or more neurons. One value in the weight vector of the network layer represents a weight value of one neuron at the network layer, and one value in the bias vector of the network layer represents a bias value of one neuron at the network layer.

In a possible manner, the model information of the decoding model may be a model file of the decoding model, that is, includes connections between all network layers of the decoding model and network parameters of all the network layers.

In a possible manner, the model information of the decoding model may be a connection between updated network layers of the decoding model and/or a network parameter of an updated network layer.

According to the first aspect or any one of the foregoing implementations of the first aspect, the preset identifier value further represents a type of the decoding model. In this way, the second electronic device learns whether the second electronic device needs to obtain the model information of the decoding model and perform model reconstruction.

According to a second aspect, an embodiment of this application provides a decoding method. The decoding method includes: first receiving a first bitstream, where the first bitstream includes a model identifier and a second bitstream, and the second bitstream is generated based on an encoded signal; obtaining model information when a value of the model identifier is a preset identifier value; then performing model reconstruction based on the model information, to obtain a decoding model; and then decoding the second bitstream based on the decoding model, to obtain a reconstructed signal.

The decoding method may be applied to a second electronic device. In this way, when determining that the model identifier is the preset identifier value, the second electronic device obtains the model information and performs model reconstruction, to synchronously update the decoding model and an encoding model of a first electronic device, or synchronously switch the decoding model used for decoding and an encoding model used by a first electronic device for encoding. Therefore, long-term evolution of a coding standard and coding performance optimization are facilitated.

For example, the reconstructed signal may include but is not limited to a reconstructed audio signal, a reconstructed image, or a reconstructed video signal.

According to the second aspect, when the value of the model identifier is the preset identifier value, the first bitstream further includes a third bitstream, and the third bitstream is generated based on the model information of the decoding model; and obtaining the model information includes: parsing out the third bitstream from the first bitstream; and obtaining the model information of the decoding model based on the third bitstream.

According to the second aspect or any one of the foregoing implementations of the second aspect, when the value of the model identifier is the preset identifier value, the first bitstream further includes index information corresponding to the model information of the decoding model; and obtaining the model information includes: parsing out the index information corresponding to the model information of the decoding model from the first bitstream; and obtaining the model information of the decoding model based on the index information corresponding to the model information of the decoding model.

According to the second aspect or any one of the foregoing implementations of the second aspect, the preset identifier value represents that the model information of the decoding model is stored at a preset storage location of a remote electronic device; and obtaining the model information includes: obtaining the model information of the decoding model from the preset storage location in the remote electronic device.

The remote electronic device may also be the foregoing third electronic device.

According to the second aspect or any one of the foregoing implementations of the second aspect, the model identifier is an ES field; and the method further includes: parsing a field corresponding to the model identifier in the first bitstream, to obtain the value of the model identifier.

According to the second aspect or any one of the foregoing implementations of the second aspect, a target bitstream type of the first bitstream is a type of a bitstream encapsulated according to a target container format or a type of a bitstream encapsulated according to a target transport protocol, and the model identifier is a field in the target container format; and the method further includes: decapsulating the first bitstream according to the target container format, to obtain a field corresponding to the model identifier; and parsing the field corresponding to the model identifier, to obtain the value of the model identifier.

According to the second aspect or any one of the foregoing implementations of the second aspect, a target bitstream type of the first bitstream is a type of a bitstream encapsulated according to a target transport protocol, and the model identifier is a field in the target transport protocol; and the method further includes: decapsulating the first bitstream according to the target transport protocol, to obtain a field corresponding to the model identifier; and parsing the field corresponding to the model identifier, to obtain the value of the model identifier.

According to the second aspect or any one of the foregoing implementations of the second aspect, the model identifier represents a type of the decoding model; and the method further includes: when the value of the model identifier is the preset identifier value, determining whether there is a decoding model of a type corresponding to the preset identifier value; and performing model reconstruction based on the model information, to obtain the decoding model includes: when there is no decoding model of the type corresponding to the preset identifier value, performing model reconstruction based on the model information, to obtain the decoding model of the type corresponding to the preset identifier value.

According to the second aspect or any one of the foregoing implementations of the second aspect, parsing out the third bitstream from the second bitstream includes: parsing the first bitstream according to the target bitstream type of the first bitstream, to obtain the third bitstream.

According to the second aspect or any one of the foregoing implementations of the second aspect, the target bitstream type is an ES type, the first bitstream further includes a first ES packet, and the first ES packet includes the second bitstream, the third bitstream, and the model identifier; parsing the first bitstream according to the target bitstream type of the first bitstream, to obtain the third bitstream includes: reading the third bitstream from the first ES packet; and the method further includes: reading the second bitstream from the first ES packet.

For example, this application neither limits an execution sequence of parsing out the second bitstream from the first bitstream and parsing out the value of the model identifier from the first bitstream, nor limits an execution sequence of parsing out the second bitstream from the first bitstream and parsing out the third bitstream from the first bitstream.

According to the second aspect or any one of the foregoing implementations of the second aspect, the target bitstream type is a type of a bitstream encapsulated according to a target container format; parsing the first bitstream according to the target bitstream type of the first bitstream, to obtain the third bitstream includes: decapsulating the first bitstream according to the target container format, to obtain a second ES packet; and reading the third bitstream from the second ES packet; and the method further includes: reading the second bitstream from the second ES packet.

According to the second aspect or any one of the foregoing implementations of the second aspect, the target bitstream type is a type of a bitstream encapsulated according to a target container format; parsing the first bitstream according to the target bitstream type of the first bitstream, to obtain the third bitstream includes: decapsulating the first bitstream according to the target container format, to obtain a third ES packet, a fourth ES packet, a type of the third ES packet, and a type of the fourth ES packet; and reading the third bitstream from the third ES packet, where the type of the third ES packet is a preset type; and the method further includes: reading the second bitstream from the fourth ES packet, where the type of the fourth ES packet is a media type.

According to the second aspect or any one of the foregoing implementations of the second aspect, the preset type is a metadata type.

According to the second aspect or any one of the foregoing implementations of the second aspect, the target bitstream type is a type of a bitstream encapsulated according to a target container format, the first bitstream further includes a fourth bitstream and a fifth bitstream, the fifth bitstream includes the second bitstream, the fourth bitstream includes the third bitstream, and the model identifier is located in the fourth bitstream or the fifth bitstream; parsing the first bitstream according to the target bitstream type of the first bitstream, to obtain the third bitstream includes: decapsulating the fourth bitstream according to the target container format, to obtain a fifth ES packet and a type of the fifth ES packet; and reading the third bitstream from the fifth ES packet, where the type of the fifth ES packet is a preset type; and the method further includes: decapsulating the fifth bitstream according to the target container format, to obtain a sixth ES packet and a type of the sixth ES packet; and reading the second bitstream from the sixth ES packet, where the type of the sixth ES packet is a media type.

According to the second aspect or any one of the foregoing implementations of the second aspect, the target bitstream type is a type of a bitstream encapsulated according to a target transport protocol, the first bitstream further includes a sixth bitstream and a seventh bitstream, the seventh bitstream includes the second bitstream, the sixth bitstream includes the third bitstream, and the model identifier is located in the sixth bitstream or the seventh bitstream; parsing the first bitstream according to the target bitstream type of the first bitstream, to obtain the third bitstream includes: decapsulating the first bitstream according to the target transport protocol, to obtain the sixth bitstream; decapsulating the sixth bitstream according to a target container format, to obtain a seventh ES packet and a type of the seventh ES packet; and reading the third bitstream from the seventh ES packet, where the type of the seventh ES packet is a preset type; and the method further includes: decapsulating, according to the target container format, the seventh bitstream that is decapsulated from the first bitstream, to obtain an eighth ES packet and a type of the eighth ES packet; and reading the second bitstream from the eighth ES packet, where the type of the eighth ES packet is a media type.

According to the second aspect or any one of the foregoing implementations of the second aspect, the first bitstream further includes an index file, the index file includes index information of the sixth bitstream and index information of the seventh bitstream, and the index information of the sixth bitstream is before the index information of the seventh bitstream; and decapsulating the first bitstream according to the target transport protocol, to obtain the sixth bitstream includes: decapsulating the first bitstream according to the target transport protocol, to obtain the index file and a plurality of bitstreams; and reading the index information of the sixth bitstream from the index file, and determining the sixth bitstream from the plurality of bitstreams based on the index information of the sixth bitstream.

According to the second aspect or any one of the foregoing implementations of the second aspect, the first bitstream further includes an index file, and attribute information of an initialization tag in the index file includes index information of the sixth bitstream; and decapsulating the first bitstream according to the target transport protocol, to obtain the sixth bitstream includes: decapsulating the first bitstream according to the target transport protocol, to obtain the index file and a plurality of bitstreams; and reading the index information of the sixth bitstream from the attribute information of the initialization tag of the index file, and determining the sixth bitstream from the plurality of bitstreams based on the index information of the sixth bitstream.

According to the second aspect or any one of the foregoing implementations of the second aspect, the reconstructed signal includes M frames, there are M first ES packets, the M first ES packets include N ninth ES packets and M-N tenth ES packets, the ninth ES packet includes one sub-bitstream and one second bitstream, the tenth ES packet includes one second bitstream, M and N are positive integers, and M is greater than or equal to N; reading the third bitstream from the first ES packet includes: reading N sub-bitstreams from the N ninth ES packets; and splicing the N sub-bitstreams to obtain the third bitstream; and reading the second bitstream from the first ES packet includes: reading N second bitstreams from the N ninth ES packets, and using the M-N tenth ES packets as M-N second bitstreams.

According to the second aspect or any one of the foregoing implementations of the second aspect, the first bitstream further includes an index file, and the index file includes index information corresponding to the model information of the decoding model; and parsing out the index information corresponding to the model information of the decoding model from the first bitstream includes: decapsulating the first bitstream based on a target transport format, to obtain the index file; and reading the index information corresponding to the model information of the decoding model from the index file.

According to the second aspect or any one of the foregoing implementations of the second aspect, determining the model information based on the third bitstream includes: parsing out the model information from the third bitstream; or parsing out encoded data of the model information from the third bitstream, and decoding the encoded data of the model information to obtain the model information.

According to the second aspect or any one of the foregoing implementations of the second aspect, the model information includes model structure information or a model parameter.

The second aspect and any implementation of the second aspect respectively correspond to the first aspect and any implementation of the first aspect. For technical effects corresponding to the second aspect and any implementation of the second aspect, refer to the technical effects corresponding to the first aspect and any implementation of the first aspect. Details are not described herein again.

According to a third aspect, this application provides an encoding apparatus used in a first electronic device. The apparatus includes:
a signal obtaining module, configured to obtain a to-be-encoded signal; and
an encoding module, configured to generate a first bitstream, where the first bitstream includes a second bitstream and a model identifier, the second bitstream is obtained by encoding to-be-encoded information based on an encoding model, a value of the model identifier is a preset identifier value, the preset identifier value indicates a second electronic device to obtain model information of a decoding model, and the decoding model corresponds to the encoding model.

It should be understood that the encoding apparatus may perform the step in any one of the first aspect and the implementations of the first aspect. Details are not described herein again.

According to a fourth aspect, this application provides a decoding apparatus. The apparatus includes:
a bitstream receiving module, configured to receive a first bitstream, where the first bitstream includes a model identifier and a second bitstream, and the second bitstream is generated based on an encoded signal;
a decapsulation module, configured to obtain model information when a value of the model identifier is a preset identifier value, where
the decapsulation module is further configured to perform model reconstruction based on the model information, to obtain a decoding model; and
a decoder, configured to decode the second bitstream based on the decoding model, to obtain a reconstructed signal.

For example, the decoding apparatus may be used in a second electronic device.

It should be understood that the decoding apparatus may perform the step in any one of the second aspect and the implementations of the second aspect. Details are not described herein again.

According to a fifth aspect, an embodiment of this application provides an electronic device, including a memory and a processor. The memory is coupled to the processor. The memory stores program instructions. When the program instructions are executed by the processor, the electronic device is enabled to perform the encoding method performed by the first electronic device in the first aspect or any possible implementation of the first aspect.

The fifth aspect and any implementation of the fifth aspect respectively correspond to the first aspect and any implementation of the first aspect. For technical effects corresponding to the fifth aspect and any implementation of the fifth aspect, refer to the technical effects corresponding to the first aspect and any implementation of the first aspect. Details are not described herein again.

According to a sixth aspect, an embodiment of this application provides an electronic device, including a memory and a processor. The memory is coupled to the processor. The memory stores program instructions. When the program instructions are executed by the processor, the electronic device is enabled to perform the decoding method performed by the second electronic device in the second aspect or any possible implementation of the second aspect.

The sixth aspect and any implementation of the sixth aspect respectively correspond to the second aspect and any implementation of the second aspect. For technical effects corresponding to the sixth aspect and any implementation of the sixth aspect, refer to the technical effects corresponding to the second aspect and any implementation of the second aspect. Details are not described herein again.

According to a seventh aspect, an embodiment of this application provides a chip, including one or more interface circuits and one or more processors. The interface circuit is configured to: receive a signal from a memory of an electronic device, and send the signal to the processor, where the signal includes computer instructions stored in the memory. When the processor executes the computer instructions, the step of the encoding method according to the first aspect or any possible implementation of the first aspect is performed.

The seventh aspect and any implementation of the seventh aspect respectively correspond to the first aspect and any implementation of the first aspect. For technical effects corresponding to the seventh aspect and any implementation of the seventh aspect, refer to the technical effects corresponding to the first aspect and any implementation of the first aspect. Details are not described herein again.

According to an eighth aspect, an embodiment of this application provides a chip, including one or more interface circuits and one or more processors. The one or more processors receive or send data via the one or more interface circuits. When the one or more processors execute computer instructions, the step of the decoding method according to the second aspect or any possible implementation of the second aspect is performed.

The eighth aspect and any implementation of the eighth aspect respectively correspond to the second aspect and any implementation of the second aspect. For technical effects corresponding to the eighth aspect and any implementation of the eighth aspect, refer to the technical effects corresponding to the second aspect and any implementation of the second aspect. Details are not described herein again.

According to a ninth aspect, an embodiment of this application provides a computer-readable storage medium. The computer-readable storage medium stores a computer program. When the computer program is run on a computer or a processor, the computer or the processor is enabled to perform the encoding method according to the first aspect or any possible implementation of the first aspect.

The ninth aspect and any implementation of the ninth aspect respectively correspond to the first aspect and any implementation of the first aspect. For technical effects corresponding to the ninth aspect and any implementation of the ninth aspect, refer to the technical effects corresponding to the first aspect and any implementation of the first aspect. Details are not described herein again.

According to a tenth aspect, an embodiment of this application provides a computer-readable storage medium. The computer-readable storage medium stores a computer program. When the computer program is run on a computer or a processor, the computer or the processor is enabled to perform the decoding method according to the second aspect or any possible implementation of the second aspect.

The tenth aspect and any implementation of the tenth aspect respectively correspond to the second aspect and any implementation of the second aspect. For technical effects corresponding to the tenth aspect and any implementation of the tenth aspect, refer to the technical effects corresponding to the second aspect and any implementation of the second aspect. Details are not described herein again.

According to an eleventh aspect, an embodiment of this application provides a computer program product. The computer program product includes computer instructions. When the computer instructions are executed by a computer or a processor, the computer or the processor is enabled to perform the encoding method according to the first aspect or any possible implementation of the first aspect.

The eleventh aspect and any implementation of the eleventh aspect respectively correspond to the first aspect and any implementation of the first aspect. For technical effects corresponding to the eleventh aspect and any implementation of the eleventh aspect, refer to the technical effects corresponding to the first aspect and any implementation of the first aspect. Details are not described herein again.

According to a twelfth aspect, an embodiment of this application provides a computer program product. The computer program product includes computer instructions. When the computer instructions are executed by a computer or a processor, the computer or the processor is enabled to perform the decoding method according to the second aspect or any possible implementation of the second aspect.

The twelfth aspect and any implementation of the twelfth aspect respectively correspond to the second aspect and any implementation of the second aspect. For technical effects corresponding to the twelfth aspect and any implementation of the twelfth aspect, refer to the technical effects corresponding to the second aspect and any implementation of the second aspect. Details are not described herein again.

According to a thirteenth aspect, an embodiment of this application provides a bitstream generation method. A bitstream may be generated by using the encoding method according to the first aspect or any implementation of the first aspect.

The thirteenth aspect and any implementation of the thirteenth aspect respectively correspond to the first aspect and any implementation of the first aspect. For technical effects corresponding to the thirteenth aspect and any implementation of the thirteenth aspect, refer to the technical effects corresponding to the first aspect and any implementation of the first aspect. Details are not described herein again.

According to a fourteenth aspect, an embodiment of this application provides a bitstream storage apparatus. The apparatus includes a receiver and at least one storage medium. The receiver is configured to receive a bitstream. The at least one storage medium is configured to store the bitstream. The bitstream is the first bitstream generated according to the first aspect and any implementation of the first aspect.

The fourteenth aspect and any implementation of the fourteenth aspect respectively correspond to the first aspect and any implementation of the first aspect. For technical effects corresponding to the fourteenth aspect and any implementation of the fourteenth aspect, refer to the technical effects corresponding to the first aspect and any implementation of the first aspect. Details are not described herein again.

According to a fifteenth aspect, an embodiment of this application provides a bitstream transmission apparatus. The apparatus includes a transmitter and at least one storage medium. The at least one storage medium is configured to store a bitstream. The bitstream is the first bitstream generated according to the first aspect and any implementation of the first aspect. The transmitter is configured to: obtain the bitstream from the storage medium, and send the bitstream to a device-side device through a transmission medium.

The fifteenth aspect and any implementation of the fifteenth aspect respectively correspond to the first aspect and any implementation of the first aspect. For technical effects corresponding to the fifteenth aspect and any implementation of the fifteenth aspect, refer to the technical effects corresponding to the first aspect and any implementation of the first aspect. Details are not described herein again.

According to a sixteenth aspect, an embodiment of this application provides a bitstream delivery system. The system includes: at least one storage medium, configured to store at least one bitstream, where the at least one bitstream is the first bitstream generated according to the first aspect and any implementation of the first aspect; and a streaming media device, configured to: obtain a target bitstream from the at least one storage medium, and send the target bitstream to a device-side device, where the streaming media device includes a content server or a content delivery server.

The sixteenth aspect and any implementation of the sixteenth aspect respectively correspond to the first aspect and any implementation of the first aspect. For technical effects corresponding to the sixteenth aspect and any implementation of the sixteenth aspect, refer to technical effects corresponding to the first aspect and any implementation of the first aspect. Details are not described herein again.

According to a seventeenth aspect, an embodiment of this application provides a compression system. The compression system includes an encoder side and a decoder side, where
the encoder side is configured to: obtain a to-be-encoded signal; and generate a first bitstream, where the first bitstream includes a second bitstream and a model identifier, the second bitstream is obtained by encoding the to-be-encoded signal based on an encoding model, a value of the model identifier is a preset identifier value, the preset identifier value indicates a second electronic device to obtain model information of a decoding model, and the decoding model corresponds to the encoding model; and
the decoder side is configured to: receive the first bitstream; obtain model information when the value of the model identifier is the preset identifier value; perform model reconstruction based on the model information, to obtain the decoding model; and decode the second bitstream based on the decoding model, to obtain a reconstructed signal.

The seventeenth aspect and any implementation of the seventeenth aspect respectively correspond to the first aspect and any implementation of the first aspect, and respectively correspond to the second aspect and any implementation of the second aspect. For technical effects corresponding to the seventeenth aspect and any implementation of the seventeenth aspect, refer to the technical effects corresponding to the first aspect and any implementation of the first aspect, and refer to the technical effects corresponding to the second aspect and any implementation of the second aspect. Details are not described herein again.

### BRIEF DESCRIPTION OF DRAWINGS

FIG. 1A illustrates a system framework;
FIG. 1B illustrates a system framework;
FIG. 1C illustrates a structure of an encoding module and a structure of a decoding module;
FIG. 2 illustrates an encoding process;
FIG. 3 illustrates a decoding process;
FIG. 4 illustrates an audio encoding process;
FIG. 5 illustrates an audio decoding process;
FIG. 6A illustrates an audio encoding process;
FIG. 6B illustrates a model information bitstream;
FIG. 6C illustrates a structure of a first bitstream;
FIG. 7 illustrates an audio decoding process;
FIG. 8 illustrates an audio encoding process;
FIG. 9 illustrates an audio decoding process;
FIG. 10A illustrates an audio encoding process;
FIG. 10B illustrates a structure of a first bitstream;
FIG. 11 illustrates an audio decoding process;
FIG. 12A illustrates an audio encoding process;
FIG. 12B illustrates a metadata encapsulation process;
FIG. 13 illustrates an audio decoding process;
FIG. 14A illustrates an audio encoding process;
FIG. 14B illustrates a structure of a first bitstream;
FIG. 15 illustrates an audio decoding process;
FIG. 16A illustrates an audio encoding process;
FIG. 16B illustrates a structure of a first bitstream;
FIG. 17 illustrates an audio decoding process;
FIG. 18 illustrates an encoding apparatus;
FIG. 19 illustrates a decoding apparatus; and
FIG. 20 illustrates a structure of an apparatus.

### DESCRIPTION OF EMBODIMENTS

The following clearly and completely describes the technical solutions in embodiments of this application with reference to the accompanying drawings in embodiments of this application. It is clear that the described embodiments are a part other than all of embodiments of this application. All other embodiments obtained by a person of ordinary skill in the art based on embodiments of this application without creative efforts shall fall within the protection scope of this application.

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and so on are intended to distinguish between different objects but do not describe a specific order of the objects. For example, a first target object, a second target object, and the like are used for distinguishing between different target objects, but are not used for describing a specific order of the target objects.

In embodiments of this application, the word like "example" or "for example" is used to represent giving an example, an illustration, or a description. Any embodiment or design scheme described as an "example" or "for example" in embodiments of this application should not be explained as being more preferred or having more advantages than another embodiment or design scheme. To be precise, use of the word like "example" or "for example" is intended to present a relative concept in a specific manner.

In descriptions of embodiments of this application, unless otherwise stated, "a plurality of" means two or more. For example, a plurality of processing units mean two or more processing units, and a plurality of systems mean two or more systems.

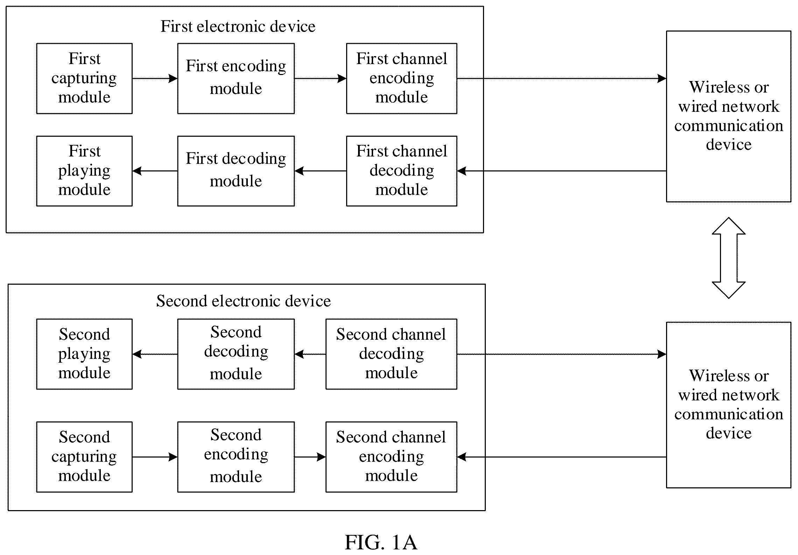

FIG. 1A illustrates a system framework. In FIG. 1A, an encoding and decoding framework for a media signal is shown. The media signal may include but is not limited to an audio signal, a video signal, and an image.

Refer to FIG. 1A. For example, a first electronic device may include a first capturing module, a first encoding module, a first channel encoding module, a first channel decoding module, a first decoding module, and a first playing module. It should be understood that the first electronic device may include more or fewer modules than those shown in FIG. 1A. This is not limited in this application.

Refer to FIG. 1A. For example, a second electronic device may include a second capturing module, a second encoding module, a second channel encoding module, a second channel decoding module, a second decoding module, and a second playing module. It should be understood that the second electronic device may include more or fewer modules than those shown in FIG. 1A. This is not limited in this application.

For example, a process in which the first electronic device encodes and transmits a media signal to the second electronic device, and the second electronic device decodes and plays the media signal may be as follows: The first capturing module may perform capturing, and output the media signal to the first encoding module. Then, the first encoding module may encode the media signal, and output a bitstream to the first channel encoding module. Then, the first channel encoding module may perform channel encoding on the bitstream, and transmit, to the second electronic device via a wireless or wired network communication device, the bitstream obtained through channel encoding. Then, the second channel decoding module of the second electronic device may perform channel decoding on received data to obtain the bitstream, and output the bitstream to the second decoding module. Then, the second decoding module may decode the bitstream to obtain a reconstructed signal, and then output the reconstructed signal to the second playing module, and the second playing module plays the reconstructed signal.

It should be understood that a process in which the second electronic device encodes and transmits a media signal to the first electronic device, and the first electronic device decodes and plays the media signal is similar to the process in which the first electronic device transmits the media signal to the second electronic device, and the second electronic device plays the media signal. Details are not described herein again.

It should be understood that the first electronic device and the second electronic device may be directly connected to each other, and communicate with each other without the wireless or wired network communication device. This is not limited in this application.

For example, the first electronic device and the second electronic device each may include but are not limited to a personal computer, a computer workstation, a smartphone, a tablet computer, a server, a smart camera, a smart car, another type of cellular phone, a media consumption device, a wearable device, a set-top box, a game console, and the like.

For example, the encoding and decoding framework in FIG. 1A may be applied to any scenario in which encoding and decoding need to be performed, for example, a VR (Virtual Reality, virtual reality)/AR (Augmented Reality, augmented Reality) scenario. In VR and AR scenarios, in a possible manner, the first electronic device is a server, and the second electronic device is a VR/AR device; or in a possible manner, the second electronic device is a server, and the first electronic device is a VR/AR device.

For example, the first electronic device may be referred to as an encoder side, and the second electronic device is referred to as a decoder side; or the second electronic device may be referred to as an encoder side, and the first electronic device is referred to as a decoder side.

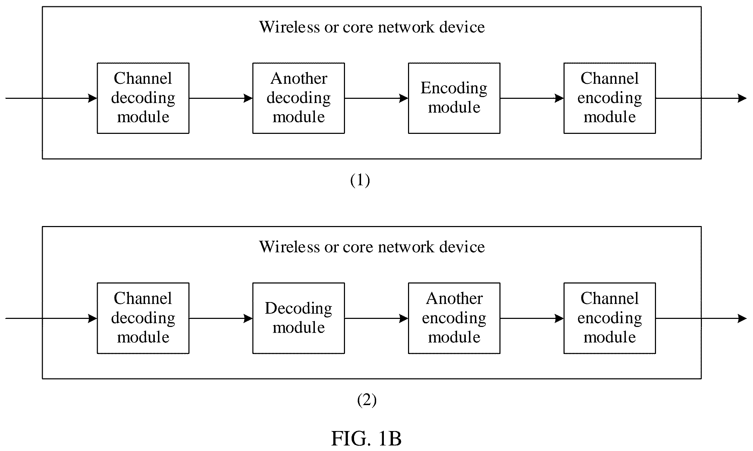

FIG. 1B illustrates a system framework. In FIG. 1B, a transcoding framework for a media signal is shown.

Refer to (1) in FIG. 1B. For example, a wireless or core network device may include a channel decoding module, another decoding module, an encoding module (namely, an encoding module in this application), and a channel encoding module. The wireless or core network device may be used for transcoding.

For example, a specific application scenario of (1) in FIG. 1B may be as follows: When a first electronic device is not provided with an encoding module and is provided with only another encoding module, and a second electronic device is provided with only a decoding module and is not provided with another decoding module, the wireless or core network device may be used for transcoding, so that the second electronic device can decode and play a media signal encoded by the first electronic device via the another encoding module.

Specifically, the first electronic device encodes the media signal via the another encoding module, to obtain a bitstream 1, and sends the bitstream 1 to the wireless or core network device after performing channel encoding on the bitstream 1. Then, the channel decoding module of the wireless or core network device may perform channel decoding, and output the bitstream 1 obtained through channel decoding to the another decoding module. Then, the another decoding module decodes the bitstream 1 to obtain the media signal and outputs the media signal to the encoding module. Then, the encoding module may encode the media signal to obtain a bitstream 2, and output the bitstream 2 to the channel encoding module. After performing channel encoding on the bitstream 2, the channel encoding module sends the bitstream 2 to the second electronic device. In this way, the second electronic device can invoke the decoding module to decode the bitstream 2 obtained through channel decoding, to obtain a reconstructed signal; and subsequently, the reconstructed signal can be played.

Refer to (2) in FIG. 1B. For example, a wireless or core network device may include a channel decoding module, a decoding module (namely, the encoding module in this application), another encoding module, and a channel encoding module. The wireless or core network device may be used for transcoding.

For example, a specific application scenario of (2) in FIG. 1B may be as follows: When a first electronic device is provided with only an encoding module and is not provided with another encoding module, and a second electronic device is not provided with a decoding module and is provided with only another decoding module, the wireless or core network device may be used for transcoding, so that the second electronic device can decode and play a media signal encoded by the first electronic device via the encoding module.

Specifically, the first electronic device encodes the media signal via the encoding module to obtain a bitstream 1, and sends the bitstream 1 to the wireless or core network device after performing channel encoding on the bitstream 1. Then, the channel decoding module of the wireless or core network device may perform channel decoding, and output the bitstream 1 obtained through channel decoding to the decoding module. Then, the decoding module decodes the bitstream 1 to obtain the media signal, and outputs the media signal to the another encoding module. Then, the another encoding module may encode the media signal to obtain a bitstream 2, and output the bitstream 2 to the channel encoding module. After performing channel encoding on the bitstream 2, the channel encoding module sends the bitstream 2 to the second electronic device. In this way, the second electronic device can invoke the another decoding module to decode the bitstream 2 obtained through channel decoding, to obtain a reconstructed signal; and subsequently, the reconstructed signal can be played.

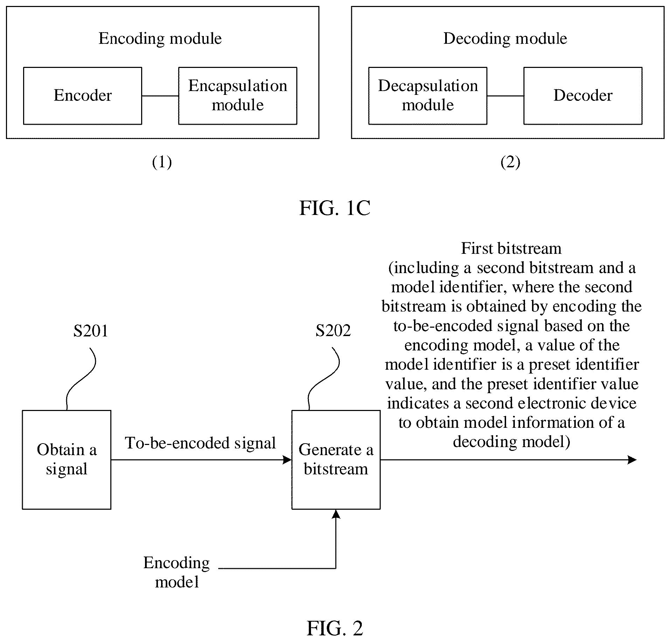

FIG. 1C illustrates a structure of an encoding module and a structure of a decoding module. In FIG. 1C, the encoding module may be the first encoding module or the second encoding module in FIG. 1A or the encoding module in FIG. 1B. In FIG. 1C, the decoding module may be the first decoding module or the second decoding module in FIG. 1A or the decoding module in FIG. 1B.

Refer to (1) in FIG. 1C. For example, the encoding module may include an encoder and an encapsulation module, where the encoder is configured to: encode a media signal based on an encoding model, and output a bitstream; and the encapsulation model is configured to encapsulate the bitstream. It should be understood that the encoding module in (1) in FIG. 1C is merely an example of this application. The encoding module in this application may include more modules than those shown in (1) in FIG. 1C. This is not limited in this application.

Refer to (2) in FIG. 1C. For example, the decoding module may include a decoder and a decapsulation module, where the decapsulation module is configured to decapsulate and parse a received bitstream; and the decoder may be configured to decode the bitstream based on a decoding model, to obtain a reconstructed signal. It should be understood that the decoding module in (2) in FIG. 1C is merely an example of this application. The decoding module in this application may include more modules than those shown in (2) in FIG. 1C. This is not limited in this application.

For example, both the encoding model and the decoding model may be implemented by using a neural network. Therefore, the encoding model may also be referred to as an AI (Artificial intelligence, artificial intelligence) encoding model, and the decoding model may also be referred to as an AI decoding model.

In a possible manner, the encoding model and the decoding model are two independent models. In this case, the encoding model and the decoding model may be jointly trained. In a possible manner, the encoding model and the decoding model are two parts of a model.

The following describes media signal encoding and decoding processes based on FIG. 1C.

FIG. 2 illustrates an encoding process. An encoding step in the embodiment in FIG. 2 may be performed by a first electronic device.

S201: Obtain a to-be-encoded signal.

For example, the to-be-encoded signal may be a media signal, where the media signal includes but is not limited to an audio signal, an image, and a video signal. The to-be-encoded signal may include M frames, and M may be a positive integer. When the to-be-encoded signal is an image, M is equal to 1.

S202: Generate a first bitstream, where the first bitstream includes a second bitstream and a model identifier, the second bitstream is obtained by encoding the to-be-encoded signal based on an encoding model, a value of the model identifier is a preset identifier value, the preset identifier value indicates a second electronic device to obtain model information of a decoding model, and the decoding model corresponds to the encoding model.

For example, an encoder in an encoding module may encode the to-be-encoded signal based on the encoding model, to obtain the second bitstream. It should be noted that, the second bitstream is a bitstream output by the encoder (which may also be referred to as a raw bitstream in some cases); and the second bitstream may include encoded data of the to-be-encoded signal (or referred to as encoded data of the media signal).

For example, the encoder may perform preprocessing, for example, transformation on the to-be-encoded signal, to obtain first data; and then may perform processing like quantization and entropy encoding on the first data, to output the second bitstream.

Then, the first bitstream is generated based on the second bitstream. For example, an encapsulation module in the encoding module may generate the first bitstream based on the second bitstream.

In a possible scenario, if the first electronic device stores only one encoding model and one decoding model, after both the encoding model and the decoding model in the first electronic device are updated, the encoding module in the first electronic device may set the value of the model identifier in the first bitstream to the preset identifier value, where the preset identifier value may indicate (or guide) the second electronic device to obtain the model information of the decoding model. This can ensure that a decoding model of the second electronic device is synchronously updated. (It should be understood that, in a possible scenario, the encoding model may not be updated, and only the decoding model is updated (for example, the decoding model is optimized). In this case, an updated decoding model corresponds to the encoding model. In this case, after the decoding model in the first electronic device is updated, the encoding module in the first electronic device may set the value of the model identifier in the first bitstream to the preset identifier value. This application is described by using an example in which both the encoding module and the decoding model are updated.)

In a possible scenario, if the first electronic device stores a plurality of encoding models and a plurality of decoding models (the encoding models one-to-one correspond to the decoding models), in a process of encoding the to-be-encoded signal, the encoder of the first electronic device may switch an encoding model used for encoding. After the encoder of the first electronic device switches the encoding model used for encoding (for example, switching from an encoding model 1 to an encoding model 2), the encoding module in the first electronic device may set the value of the model identifier in the first bitstream to the preset identifier value, where the preset identifier value may indicate the second electronic device to obtain the model information of the decoding model. This can ensure that a decoder of the second electronic device can correspondingly switch to a decoding model (for example, switching from a decoding model 1 to a decoding model 2) corresponding to the switched encoding model for decoding.

In a possible scenario, regardless of whether the encoding model and the decoding model in the first electronic device are updated, and whether the encoder in the first electronic device switches the encoding model used for encoding, the encoding module in the first electronic device may set the value of the model identifier in the first bitstream to the preset identifier value. In this case, the preset identifier value may represent a type of the decoding model (or the encoding model). Correspondingly, after obtaining the preset identifier value, the second electronic device determines whether a decoding model of a type corresponding to the preset identifier value exists in the second electronic device; and when the decoding model of the type corresponding to the preset identifier value does not exist, obtains the model information of the decoding model.

It should be understood that when the encoding model and the decoding model are two parts of a model, the preset identifier value may indicate the second electronic device to obtain model information of the encoding model and the model information of the decoding model. In this way, the second electronic device can reconstruct the encoding model based on the model information of the encoding model, and reconstruct the decoding model based on the model information of the decoding model. This application is described by using an example in which the encoding model and the decoding model are two independent models.

In a possible manner, an identifier (namely, a flag) or a field may be added to the first bitstream as the model identifier. In a possible manner, an existing field in the first bitstream may be reused, and the existing field is used as the model identifier. This is not limited in this application. When the existing field in the first bitstream is reused, and the existing field is used as the model identifier, in this application, decoding syntax does not need to be changed, that is, model updating or switching is implemented while maintaining backward compatibility.

For example, the first electronic device may include a bitstream transmission apparatus. The bitstream transmission apparatus may include a transmitter and at least one storage medium. The at least one storage medium is configured to store the first bitstream generated in the embodiment in FIG. 2. The transmitter is configured to: obtain the first bitstream from the storage medium, and send the first bitstream to a device-side device through a transmission medium.

For example, after generating the first bitstream, the first electronic device may send the first bitstream to a bitstream delivery system. The bitstream delivery system may include at least one storage medium and a streaming media device. The storage medium is configured to store at least one first bitstream generated in the embodiment in FIG. 2. The streaming media device is configured to: obtain a target bitstream from the at least one storage medium, and send the target bitstream to a device-side device, where the streaming media device includes a content server or a content delivery server.

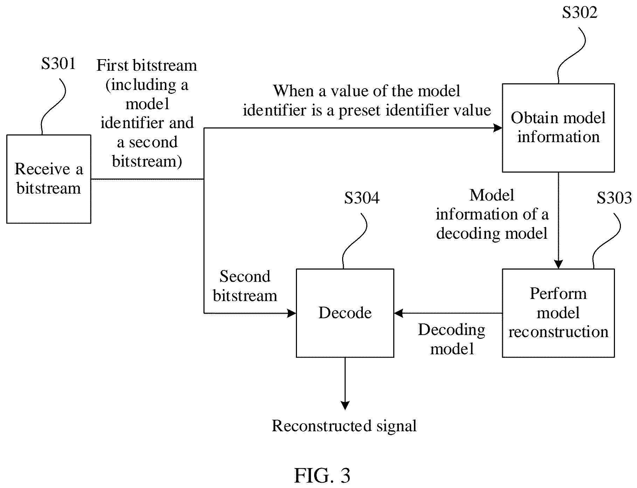

FIG. 3 illustrates a decoding process. FIG. 3 shows a decoding process corresponding to the encoding process in FIG. 2. A decoding step in the embodiment in FIG. 3 may be performed by the second electronic device. For example, the second electronic device may include a bitstream storage apparatus. The bitstream storage apparatus may include a receiver and at least one storage medium, where the receiver is configured to receive the first bitstream, and the at least one storage medium is configured to store the first bitstream. Then, the first bitstream may be decoded with reference to S302 to S304.

S301: Receive the first bitstream.

For example, after the first electronic device sends the first bitstream, the second electronic device may receive the first bitstream.

For example, a decapsulation module in a decoding module of the second electronic device may parse out the value of the model identifier from the first bitstream; and then may determine, based on the value that is of the model identifier and that is parsed out, whether the first electronic device updates the encoding module and the decoding model, or determine whether the encoder in the first electronic device switches the encoding model used for encoding.

S302: Obtain the model information of the decoding model when the value of the model identifier is the preset identifier value.

For example, when the value of the model identifier is the preset identifier value, it indicates that the first electronic device has updated the encoding module and the encoding model, or it indicates that the encoder of the first electronic device has switched the encoding model used for encoding. In this case, the second electronic device may obtain the model information of the decoding model.

For example, when the value of the model identifier is another identifier value, it indicates that the first electronic device has not updated the encoding module and the encoding model, or it indicates that the encoder of the first electronic device has not switched the encoding model used for encoding. In this case, the second electronic device does not need to obtain the model information of the decoding model. In this case, the decapsulation module in the decoding model of the second electronic device may parse out the second bitstream from the first bitstream, and then the decoder may decode the second bitstream based on a decoding model of a type corresponding to the another identifier value (or a default decoding model), to obtain a reconstructed signal.

For example, regardless of whether the encoding model and the decoding model of the first electronic device are updated, and whether the encoder of the first electronic device switches the encoding model used for encoding, the first electronic device sets the value of the model identifier to the preset identifier value. When the value that is of the model identifier and that is parsed out by the second electronic device is the preset identifier value, it may be determined whether the decoding model of the type corresponding to the preset identifier value exists in the second electronic device. When the decoding model of the type corresponding to the preset identifier value does not exist in the second electronic device, S303 and S304 are performed. When the decoding model of the type corresponding to the preset identifier value exists in the second electronic device, S303 does not need to be performed. After S304 is performed, the second bitstream may be directly decoded based on the decoding model of the type corresponding to the preset identifier value.

S303: Perform model reconstruction based on the model information, to obtain the decoding model.

For example, the decapsulation module may perform model reconstruction based on the model information, to obtain the decoding model.

S304: Decode the second bitstream based on the decoding model, to obtain a reconstructed signal.

For example, the decapsulation module may further parse out the second bitstream from the first bitstream, and send the second bitstream to the decoder. It should be understood that an execution sequence of parsing out the second bitstream from the first bitstream and obtaining the model information or parsing out the value of the model identifier from the first bitstream is not limited in this application.

Then, the decoder may read the reconstructed decoding model (which may also be referred to as initialization of the decoder), and then decode the second bitstream based on the reconstructed decoding model, to obtain the reconstructed signal. Then, a decoder side can perform processing like playing on the reconstructed signal.

For example, the decoder may perform processing like entropy decoding and dequantization on the second bitstream based on the reconstructed decoding model, to obtain second data; and then may perform post-processing like inverse transformation on the second data, to obtain the reconstructed signal. The reconstructed signal may include but is not limited to a reconstructed audio signal, a reconstructed image, or a reconstructed video signal.

In a possible manner, when the first electronic device does not update the encoding model and the decoding model, or does not switch the encoding model used for encoding, the first bitstream may not include the model identifier. In this way, when the second electronic device fails to parse out the model identifier from the first bitstream, the second bitstream parsed out from the first bitstream can be decoded based on the default decoding model, to obtain the reconstructed signal.

In this way, the first electronic device sets the value of the model identifier in the first bitstream to the preset identifier value, to indicate the second electronic device to obtain the model information of the decoding model. After the first bitstream is transmitted to the second electronic device, the second electronic device may obtain the model information of the decoding model based on the preset identifier value, to synchronously update the decoding model or synchronously switch the decoding model used for decoding and the encoding model used for encoding.

In a possible manner, the first electronic device may transmit the model information of the decoding model to the second electronic device. Specifically, a third bitstream may be generated based on the model information of the decoding model. Then, the second bitstream and the third bitstream are encapsulated to obtain the first bitstream. In this case, the preset identifier value may represent that the first bitstream includes the third bitstream. In this way, the preset identifier value may indicate the second electronic device to obtain the model information of the decoding model from the first bitstream.

In this application, the following uses an example in which a to-be-encoded signal is an audio signal for description.

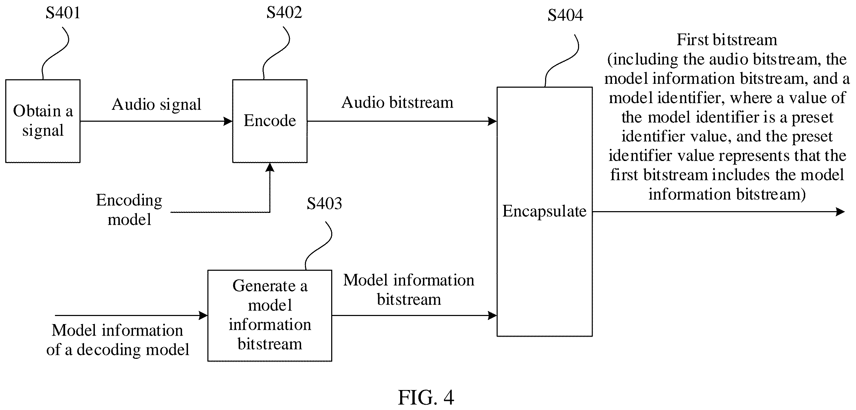

In embodiments in FIG. 4 to FIG. 17, a to-be-encoded signal is an audio signal, a second bitstream is an audio bitstream, and a third bitstream is a model information bitstream.

FIG. 4 illustrates an audio encoding process.

S401: Obtain an audio signal.

For example, a to-be-encoded audio signal may be obtained, where the audio signal may include M frames, and M may be a positive integer.

S402: Encode the audio signal based on an encoding model, to obtain an audio bitstream.

For example, an audio encoder may encode the audio signal based on the encoding model, to obtain the audio bitstream. It should be noted that the audio bitstream is a bitstream output by the audio encoder, and the audio bitstream may include encoded data of the audio signal.

For example, the audio encoder may perform audio preprocessing, for example, transformation, on the audio signal, to obtain first data; and then may perform processing like quantization and entropy encoding on the first data, to output the audio bitstream.

S403: Generate a model information bitstream based on model information of a decoding model, where the decoding model corresponds to the encoding model.

S404: Encapsulate the audio bitstream and the model information bitstream, to obtain a first bitstream, where the first bitstream includes a model identifier, a value of the model identifier is a preset identifier value, and the preset identifier value represents that the first bitstream includes the model information bitstream.

In a possible scenario, a first electronic device stores only one encoding model and one decoding model. After both the encoding model and the decoding model in the first electronic device are updated, to ensure that a decoding model of a second electronic device is synchronously updated, after the audio encoder encodes the audio signal based on an updated encoding model for the first time to obtain the audio bitstream, the first electronic device may generate the model information bitstream based on model information of an updated decoding model; then encapsulate the audio bitstream and the model information bitstream to obtain the first bitstream; set the value of the model identifier in the first bitstream to the preset identifier value (the preset identifier value represents that the first bitstream includes the model information bitstream); and then send the first bitstream to the second electronic device. In this way, the model information can be transmitted to the second electronic device, and the second electronic device reconstructs the decoding model based on the model information, to update the decoding model in the second electronic device.

In a possible scenario, a first electronic device stores a plurality of encoding models and a plurality of decoding models (the encoding models one-to-one correspond to the decoding models). In a process of encoding the audio signal, the first electronic device may switch an encoding model used for encoding. After the first electronic device switches the encoding model used for encoding (for example, switching from an encoding model 1 to an encoding model 2), to ensure that a second electronic device can correspondingly switch to a decoding model (for example, switching from a decoding model 1 to a decoding model 2) corresponding to the switched encoding model for decoding, after the audio encoder encodes the audio signal based on the switched encoding model (for example, the encoding model 2), the first electronic device may generate the model information bitstream based on model information of the decoding model (for example, the decoding model 2) corresponding to the switched encoding model; then encapsulate the audio bitstream and the model information bitstream to obtain the first bitstream; set the value of the model identifier in the first bitstream to the preset identifier value; and then send the first bitstream to a second electronic device. In this way, the model information can be transmitted to the second electronic device, and the second electronic device reconstructs, based on the model information, the decoding model (for example, the decoding model 2) corresponding to the switched encoding model.

In a possible scenario, regardless of whether the encoding model and the decoding model of a first electronic device are updated, and whether the first electronic device switches the encoding model used for encoding, the first electronic device may generate the model information bitstream based on model information of a decoding model corresponding to the encoding model used by the audio encoder to encode the audio signal; then encapsulate the audio bitstream and the model information bitstream, to obtain the first bitstream; set the value of the model identifier in the first bitstream to the preset identifier value; and then send the first bitstream to a second electronic device. In this case, the preset identifier value may further represent a type of an encoding model (or a decoding model). Further, when determining that a decoding model of a type corresponding to the preset identifier value does not exist locally, the second electronic device reconstructs the decoding model based on the model information.

It should be understood that the first electronic device may further generate a model information bitstream of the encoding model based on model information of the updated encoding model (or the switched encoding model), encapsulate the model information bitstream into the first bitstream, and send the first bitstream to the second electronic device. In this way, the second electronic device can reconstruct the encoding model based on the model information bitstream of the encoding model, so that the second electronic device can encode the audio signal based on the updated encoding model (or the switched encoding model) when performing encoding subsequently.

It should be understood that when the encoding model and the decoding model are two parts of a model, the first electronic device may encapsulate the model information bitstream of the encoding model, a model information bitstream of the decoding model, and the audio bitstream into the first bitstream, and then send the first bitstream to the second electronic device. The second electronic device may reconstruct the encoding model based on the model information bitstream of the encoding model, and reconstruct the decoding model based on the model information bitstream of the decoding model. This application is described by using an example in which the encoding model and the decoding model are two independent models.

In a possible manner, an existing field in the first bitstream may be used as the model identifier. When the first electronic device does not update the encoding model and the decoding model, or does not switch the encoding model used for encoding, that is, the first bitstream does not include the model information bitstream, the model identifier may be set to another identifier value. In this case, the another identifier value represents that the first bitstream does not include the model information bitstream.

In addition, when the preset identifier value further represents a type of the decoding model (or a type of the encoding model), the another identifier value may also represent the type of the decoding model (or the type of the encoding model). The type that is of the decoding model (or the encoding model) and that is represented by the another identifier value is different from the type that is of the decoding model (or the encoding model) and that is represented by the preset identifier value.

In a possible manner, an additional field may be added to the first bitstream as the model identifier. When the first electronic device does not update the encoding model and the decoding model, or does not switch the encoding model used for encoding, that is, the first bitstream does not include the model information bitstream, no additional field needs to be added.

For example, the model information of the decoding model may include model structure information and/or a model parameter.

The model structure information may be network structure information of a neural network, and the network structure information may include a connection relationship between network layers. The decoding model may include a plurality of types of network layers (for example, a convolutional layer, a fully connected layer, an RNN (Recurrent Neural Network, recurrent neural network) layer, and an activation layer), and there may be one or more network layers of each type.

For example, the model parameter may be a network parameter of a neural network, and the network parameter may be a weight matrix and a bias matrix that correspond to a network layer. The weight matrix includes weight vectors of a plurality of network layers, and the bias matrix includes bias vectors of the plurality of network layers. Each network layer may include one or more neurons. One value in the weight vector of the network layer represents a weight value of one neuron at the network layer, and one value in the bias vector of the network layer represents a bias value of one neuron at the network layer.

In a possible manner, the model information of the decoding model may be a model file of the decoding model, that is, includes connections between all network layers of the decoding model and network parameters of all the network layers.

In a possible manner, the model information of the decoding model may be a connection between updated network layers of the decoding model and/or a network parameter of an updated network layer.

It should be noted that S404 may be performed by an encapsulation module, and S403 may be performed by a module in an encoding module other than the audio encoder and the encapsulation module.

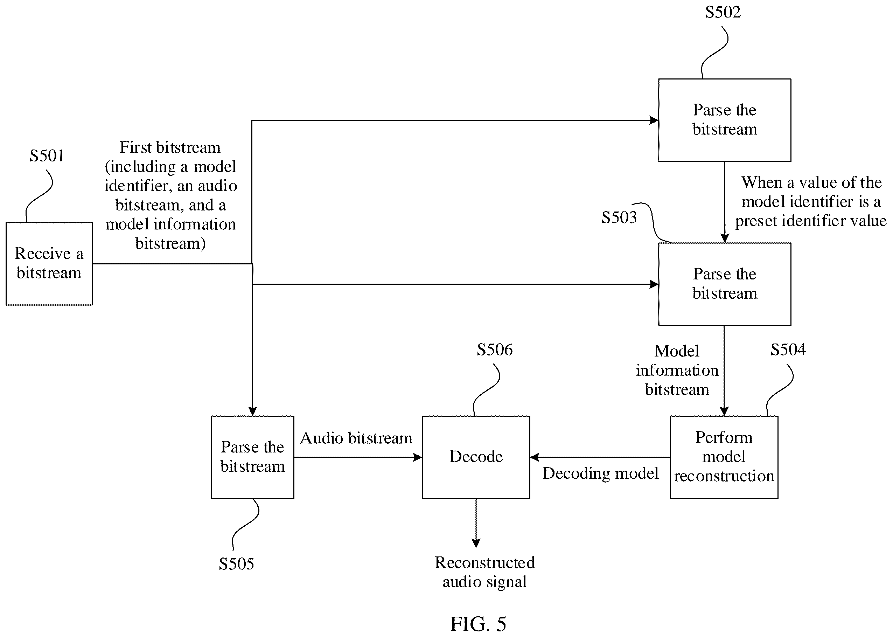

FIG. 5 illustrates an audio decoding process. FIG. 5 shows a decoding process corresponding to the audio encoding process in FIG. 4.

S501: Receive the first bitstream.

For example, after the first electronic device sends the first bitstream, the second electronic device may receive the first bitstream.

S502: Parse out the value of the model identifier from the first bitstream.

For example, a decapsulation module of the second electronic device may parse out the value of the model identifier from the first bitstream; and then may determine, based on the value that is of the model identifier and that is parsed out, whether the first electronic device updates the encoding model and the decoding model, or determine whether the first electronic device switches the encoding model used for encoding.

S503: Parse out the model information bitstream from the first bitstream when the value of the model identifier is the preset identifier value.

For example, when the value of the model identifier is the preset identifier value, it indicates that the first electronic device has updated the encoding model and the decoding model, or it indicates that the first electronic device has switched the encoding model used for encoding, that is, it represents that the first bitstream further includes the model information bitstream. In this way, the decapsulation module of the second electronic device can parse out the model information bitstream from the first bitstream.

For example, when the value of the model identifier is another identifier value, it indicates that the first electronic device has not updated the encoding model and the decoding model, or it indicates that the first electronic device has not switched the encoding model used for encoding, that is, it represents that the first bitstream does not include the model information bitstream. In this case, the second electronic device may parse out the audio bitstream from the first bitstream, and then decode the audio bitstream based on a decoding model of a type corresponding to the another identifier value (or a default decoding model), to obtain a reconstructed audio signal.

For example, regardless of whether the encoding model and the decoding model of the first electronic device are updated, and whether the first electronic device switches the encoding model used for encoding, when the first electronic device sends, to the second electronic device, a model information bitstream of a decoding model corresponding to the encoding model used by the audio encoder to encode the audio signal, if the value of the model identifier is the preset identifier value, it may be determined whether a decoding model of a type corresponding to the preset identifier value exists in the second electronic device. When the decoding model of the type corresponding to the preset identifier value does not exist in the second electronic device, S504 to S506 are performed. When the decoding model of the type corresponding to the preset identifier value exists in the second electronic device, S504 does not need to be performed. After S505 is performed, the audio bitstream may be directly decoded based on the decoding model of the type corresponding to the preset identifier value.

S504: Perform model reconstruction based on the model information, to obtain the decoding model.

For example, the decapsulation module may determine the model information based on the model information bitstream, and then perform model reconstruction based on the model information, to obtain the decoding model. Specifically, model reconstruction may be performed based on the model structure information and/or the model parameter that are/is included in the model information, to obtain the decoding model.

S505: Parse out the audio bitstream from the first bitstream.

For example, the decapsulation module may further parse out the audio bitstream from the first bitstream, and send the audio bitstream to an audio decoder. It should be understood that an execution sequence of any one of S505 and S502 to S504 is not limited in this application.

S506: Decode the audio bitstream based on the decoding model, to obtain a reconstructed audio signal.

Then, the audio decoder may read the reconstructed decoding model (which may also be referred to as initialization of the audio decoder), and then decode the audio bitstream based on the reconstructed decoding model, to obtain the reconstructed audio signal. Then, the second electronic device may perform processing like playing on the reconstructed audio signal.

For example, the audio decoder may perform processing like entropy decoding and dequantization on the audio bitstream based on the reconstructed decoding model, to obtain second data; and then may perform audio post-processing like inverse transformation on the second data, to obtain the reconstructed audio signal.

In a possible manner, when the first electronic device does not update the encoding model and the decoding module, or does not switch the encoding model used for encoding, the first bitstream includes neither the model identifier nor the model information bitstream. In this way, when the second electronic device fails to parse out the model identifier from the first bitstream, the audio bitstream parsed out from the first bitstream can be decoded based on the default decoding model, to obtain the reconstructed audio signal.

For example, the first electronic device may encapsulate the audio bitstream and the model information bitstream according to a target bitstream type (namely, an expected type of the first bitstream), to obtain the first bitstream. Correspondingly, the second electronic device may also parse the first bitstream according to the target bitstream type, to obtain the model information bitstream, the audio bitstream, and the value of the model identifier.

For example, the target bitstream type includes any one of the following: a first type, a second type, or a third type. The first type is an ES type; the second type is a type (for example, a TS type and an MP4 type) of a bitstream encapsulated according to a target container format; and the third type is a type (for example, an HLS type and an RTP type) of a bitstream encapsulated according to a target transport protocol.

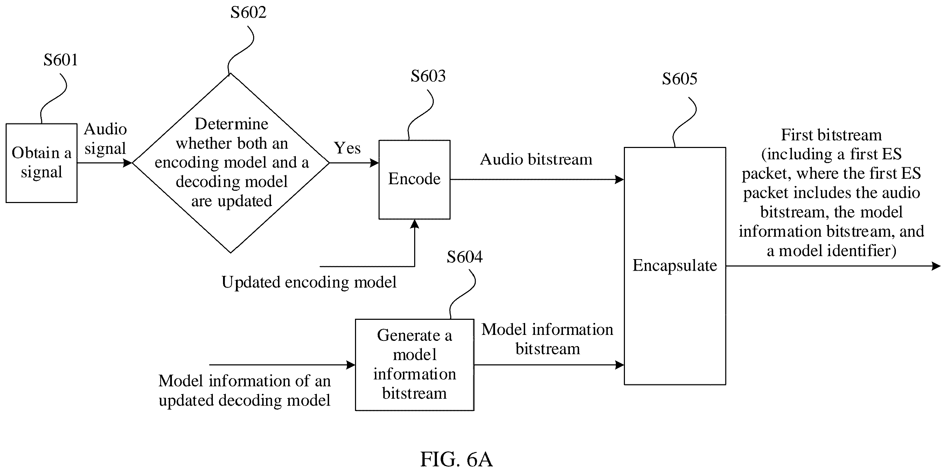

FIG. 6A illustrates an audio encoding process. In the embodiment in FIG. 6A, a target bitstream type is a first type. Correspondingly, a first bitstream may also be referred to as an ES stream. A model information bitstream and an audio bitstream may be encapsulated into a same ES packet, to obtain a first bitstream.

S601: Obtain an audio signal.

For example, the audio signal including M frames may be obtained, where M is a positive integer.

S602: Determine whether both an encoding model and a decoding model are updated.

S603: Encode the audio signal based on an updated encoding model when both the encoding model and the decoding model are updated, to obtain an audio bitstream.

For example, an audio encoder may encode the audio signal including M frames based on the updated encoding model, to obtain M audio bitstreams.

S604: Generate a model information bitstream based on model information of an updated decoding model, where the updated decoding model corresponds to the updated encoding model.

For example, model information of a decoding model (namely, the updated decoding model) corresponding to the updated encoding model may be obtained; the model information of the updated decoding model is divided into N (N is a positive integer) information groups; then one sub-bitstream may be generated based on each information group in the N information groups; and N sub-bitstreams may be obtained, that is, the model information bitstream may include a plurality of sub-bitstreams.

For example, when N is equal to 1, the model information is not divided or the model information is divided into one information group. In this case, the model information bitstream may include description information of the model information and the model information; or the model information bitstream may include description information of the model information and encoded data of the model information.

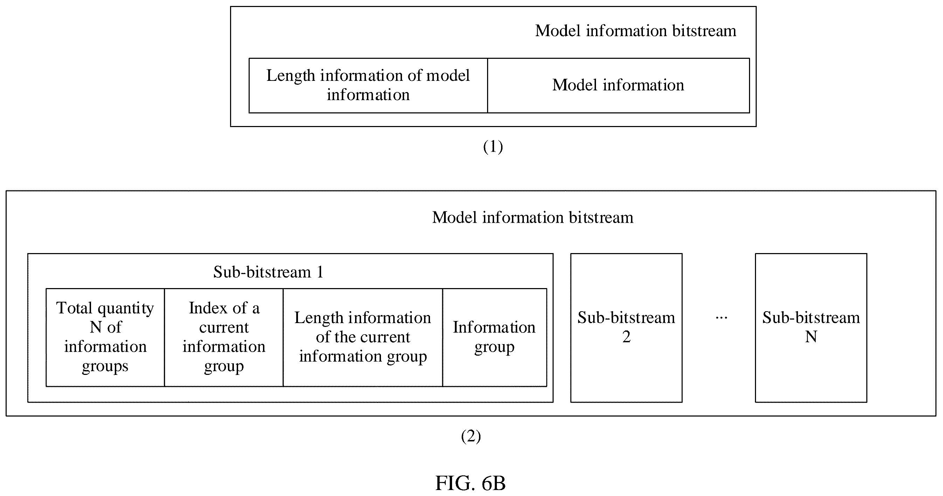

FIG. 6B illustrates the model information bitstream. In (1) in FIG. 6B, N=1, the description information of the model information is length information of the model information, and the model information bitstream may include the length information of the model information and the model information.

For example, when N is greater than 1, each sub-bitstream may include description information of an information group and the information group; or each sub-bitstream may include description information of an information group and encoded data of the information group.

Refer to (2) in FIG. 6B. For example, in (2) in FIG. 6B, N is greater than 1, and description information of each information group may include but is not limited to: a total quantity N of information groups, an index of a current information group, and length information of the current information group. The sub-bitstream may include but is not limited to: the total quantity N of information groups, the index of the current information group, the length information of the current information group, and the information group.

It should be noted that lossless encoding may be performed on the model information to obtain the encoded data of the model information, and lossless encoding may be performed on the information group to obtain encoded data of the information group. This can ensure that a decoding model reconstructed by a second electronic device is consistent with the decoding model of a first electronic device.

S605: Encapsulate the model information bitstream and the audio bitstream into a first ES packet, and use the first ES packet as a first bitstream.

For example, the model information bitstream and the audio bitstream may be encapsulated into a same ES packet, to obtain the first ES packet; and then the first ES packet is used as the first bitstream. In this case, the first bitstream may also be referred to as an ES stream.

For example, there may be M first ES packets, and the M first ES packets may include N ninth ES packets and M-N tenth ES packets, where M and N are positive integers, and M is greater than or equal to N.

Specifically, the N sub-bitstreams and N audio bitstreams may be encapsulated into the N ninth ES packets, and the other M-N audio bitstreams are used as the M-N tenth ES packets. One sub-bitstream and one audio bitstream may be encapsulated into one ninth ES packet, that is, the ninth ES packet may include one sub-bitstream and one audio bitstream. In addition, one of the other M-N audio bitstreams is used as one tenth ES packet, that is, the tenth ES packet includes one audio bitstream. It should be noted that one audio bitstream may be obtained by encoding one frame of the audio signal based on the encoding model.

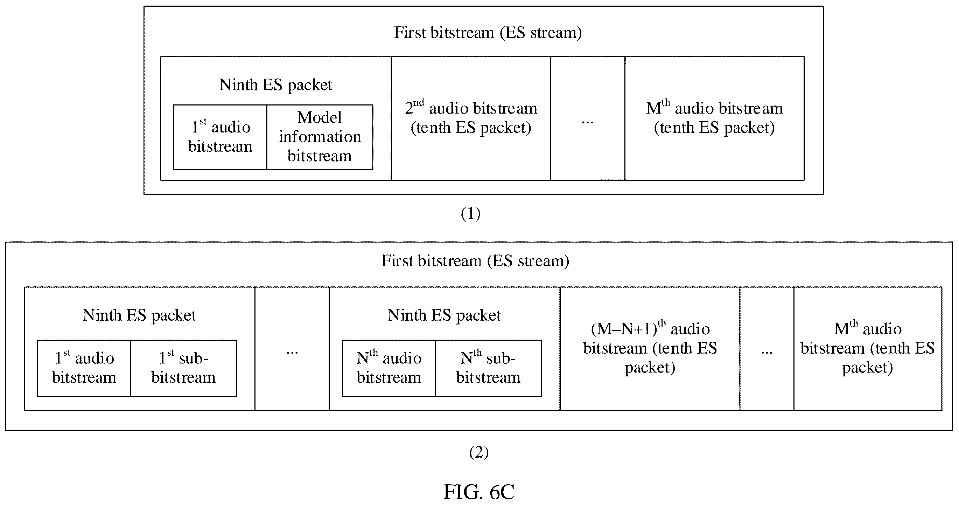

FIG. 6C illustrates a structure of the first bitstream.

Refer to (1) in FIG. 6C. For example, when N is equal to 1, the model information bitstream and one audio bitstream may be encapsulated into one ES packet, to obtain one ninth ES packet. Specifically, the model information bitstream and a 1^{st} audio bitstream are encapsulated into one ES packet to obtain one ninth ES packet; and the other M-1 audio bitstreams are used as M-1 tenth ES packets. For example, in the ninth ES packet, the model information bitstream may be after the 1^{st} audio bitstream.

Refer to (2) in FIG. 6C. For example, when N is greater than 1, one sub-bitstream and one audio bitstream may be encapsulated into one ES packet, to obtain one ninth ES packet. Specifically, the N sub-bitstreams and the N audio bitstreams are encapsulated into the N ninth ES packets, and the other M-N audio bitstreams are used as the M-N tenth ES packets. For example, in each ninth ES packet, the sub-bitstream may be after the audio bitstream.

It should be noted that N may be determined based on a data amount of the model information (or the encoded data of the model information), a network bandwidth, and encoded data of the audio signal, to ensure smoothness of playing a reconstructed audio signal by the second electronic device.

For example, in the embodiment in FIG. 6A, a model identifier may be an ES field. For example, an ES encapsulation format may include a plurality of fields, and the ES field may be a field included in the ES encapsulation format. In other words, an ES packet may be obtained by encapsulating data according to an ES encapsulation format. The ES packet may include a plurality of fields, and the ES field may be a field in the ES packet.

For example, an audio bitstream output by the audio encoder may include a header (header, that is, a header of an ES packet) and encoded data of audio data (which may also be referred to as a payload (payload) of the audio data).

For example, the header of the audio bitstream may include a field indicating a type of the decoding model (or a type of the encoding model). When there is an unused identifier value in the field, the audio encoder may use the field as a model identifier indicating whether the first bitstream includes the model information bitstream, and select a preset identifier value from unused identifier values corresponding to the field.

For example, in the Audio Vivid standard, the field indicating the type of the decoding model (or the type of the encoding model) is an nn_type field. The nn_type field may be represented by using 3 bits, that is, the nn_type field corresponds to eight identifier values: "0", "1", "2", "3", "4", "5", "6", and "7". Currently, "0" and "1" are used identifier values, and "2", "3", "4", "5", "6", and "7" are reserved identifier values, that is, unused identifier values. A definition of the nn_type field may be shown in the following Table 1:

**Table 1**

| nn_type (3 bits) | Meaning |
|---|---|
| 0 | Basic configuration Default model |
| 1 | Low-complexity configuration Default model |
| 2 to 7 | Reserved |

Further, the nn_type field may be used as the model identifier. For example, "2" may be used as the preset identifier value. In this case, a definition of the nn_type field is shown in Table 2:

**Table 2**

| nn_type (3 bits) | Meaning |
|---|---|
| 0 | Basic configuration Default model |
| 1 | Low-complexity configuration Default model |
| 2 | User-defined model |
| 3 to 7 | Reserved |

For example, different identifier values in the unused identifier values corresponding to the nn_type field may represent different types of encoding models (or decoding models), that is, different preset identifier values represent different types of encoding models (or decoding models). This may be shown in Table 3:

**Table 3**

| nn_type (3 bits) | Meaning |
|---|---|
| 0 | Basic configuration Default model |
| 1 | Low-complexity configuration Default model |
| 2 | User-defined model 1 |
| 3 | User-defined model 2 |
| 4 | User-defined model 3 |
| 5 to 7 | Reserved |

Refer to Table 3. The identifier value "2" may represent the user-defined model 1, the identifier value "3" may represent the user-defined model 3, and the identifier value "4" may represent the user-defined model 3.

For example, in another standard, the audio encoder may add an additional field to the header of the audio bitstream, use the additional field as the model identifier representing whether the first bitstream includes the model information bitstream, and set a field value of the additional field to the preset identifier value.

For example, only a model identifier in a 1^{st} ninth ES packet (that is, the ninth ES packet including the 1^{st} audio bitstream) may be set to the preset identifier value, or model identifiers in a part or all of the N ninth ES packets and the M-N tenth ES packets may be set to the preset identifier value. This is not limited in this application.

In this way, after the ES packet is obtained, the ES packet can be directly transmitted without being encapsulated according to a target container format or according to a target transport protocol, thereby reducing bit rate overheads and reducing a bandwidth requirement. In addition, the second bitstream and the third bitstream are encapsulated into the same ES packet, so that the second bitstream and the third bitstream can be sent on a same channel, thereby reducing transmission complexity.

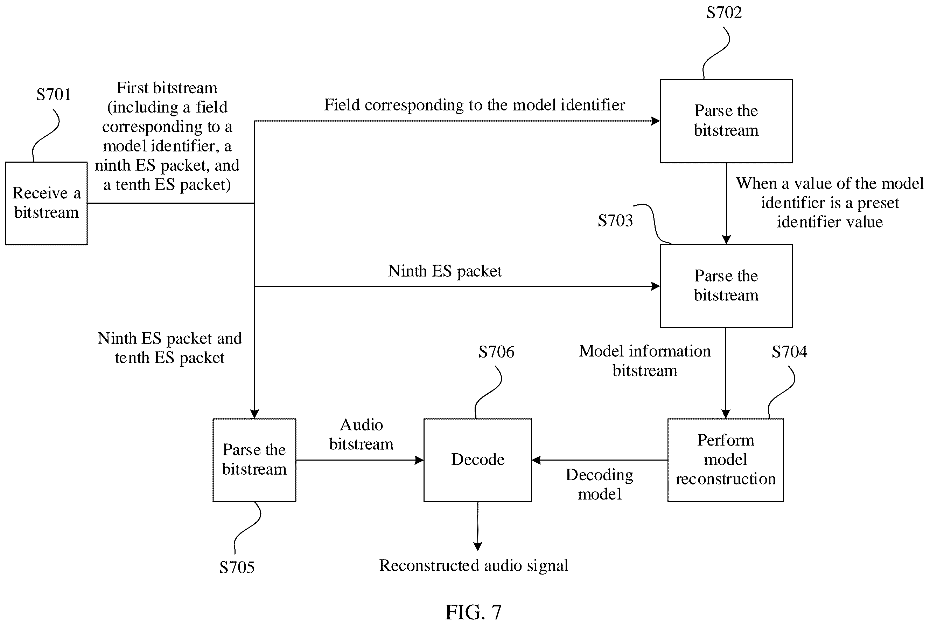

FIG. 7 illustrates an audio decoding process. FIG. 7 shows an audio decoding process corresponding to the audio encoding process in FIG. 6A.

S701: Receive the first bitstream.

For example, when the first electronic device performs encoding according to the audio encoding method in the embodiment in FIG. 6A, the first bitstream received by the second electronic device is essentially an ES stream. In this case, the first bitstream may include the first ES packet. It is assumed that the reconstructed audio signal includes M frames, there may be M first ES packets, and the M first ES packets may include N ninth ES packets and M-N tenth ES packets.

S702: Parse out a value of the model identifier from a field corresponding to a model identifier of the first ES packet.

For example, the model identifier is an ES field.

For example, after the second electronic device receives the first bitstream, a decapsulation module may parse each ES packet, to parse out a value of a model identifier from the ES packet. In the plurality of ES packets included in the first bitstream, at least one ES packet includes a field corresponding to the model identifier. Therefore, the decapsulation module may parse out the value of the model identifier from the field corresponding to the model identifier of the at least one ES packet (the ninth ES packet or the tenth ES packet).

S703: Read the model information bitstream from the ninth ES packet when the value of the model identifier is the preset identifier value.

For example, when the value of the model identifier is the preset identifier value, the decapsulation module may parse a header of each ES packet to determine a length of encoded data of the audio signal; and then determine, based on a length of the header, the length of the encoded data of the audio signal, and a total length of the ES packet, whether the ES packet includes the model information bitstream (or the sub-bitstream). When the total length of the ES packet is greater than a sum of the length of the encoded data of the audio signal and the length of the header, it is determined that the ES packet includes the model information bitstream (or the sub-bitstream), that is, the ES packet is the ninth ES packet. When the total length of the ES packet is equal to a sum of the length of the encoded data of the audio signal and the length of the header, it is determined that the ES packet does not include the model information bitstream (or the sub-bitstream), that is, the ES packet is the tenth ES packet.

For example, for one ninth ES packet, the model information bitstream (or the sub-bitstream) may be read, without reading the encoded data part of the audio signal, based on the length of the encoded data of the audio signal. When N is equal to 1, the model information bitstream may be directly read from the ninth ES packet. When N is greater than 1, N sub-bitstreams may be read, and the N sub-bitstreams may form the model information bitstream.

S704: Perform model reconstruction based on the model information, to obtain the decoding model.

For example, when N is equal to 1, the decapsulation module may parse the description information that is of the model information and that is in the model information bitstream, to determine a length of the model information (or encoded data of the model information); and then read the model information (or the encoded data of the model information) based on the length of the model information (or the encoded data of the model information).

For example, when N is greater than 1, for each sub-bitstream, the decapsulation module may parse description information of an information group in the sub-bitstream, to determine a length of the current information group (or encoded data of the current information group), an index corresponding to the current information group, and a total quantity N of information groups; and then read the information group (or the encoded data of the current information group) from the sub-bitstream based on the length of the current information group (or the encoded data of the current information group). In this way, after N information groups are obtained, the N information groups can be spliced based on indexes corresponding to the information groups, to obtain the model information. Alternatively, after encoded data of N information groups is obtained, the encoded data of the N information groups may be decoded to obtain the N information groups. Then, the N information groups may be spliced based on indexes corresponding to the information groups, to obtain the model information.

For example, when the encoded data of the model information (or the information group) is read, the decapsulation module may invoke a decoder to decode the encoded data of the model information (or the information group), to determine the model information (or the information group); and then perform model reconstruction based on the model information (or the spliced information group), to obtain the decoding model.

S705: Read the audio bitstream from the ninth ES packet, and use the tenth ES packet as the audio bitstream.

In a possible manner, after the header is parsed for one ninth ES packet to determine the length of the encoded data of the audio signal, a part corresponding to the encoded data of the audio signal in the ninth ES packet may be determined based on the length of the encoded data of the audio signal; and then the header and the part corresponding to the encoded data of the audio signal may be extracted from the ninth ES packet, to obtain the audio bitstream. The tenth ES packet may be used as the audio bitstream, and then the audio bitstream is sent to the audio decoder.

In a possible manner, after the header is parsed for one ninth ES packet to determine the length of the encoded data of the audio signal, the encoded data of the audio signal may be read from the ninth ES packet based on the length of the encoded data of the audio signal. For each tenth ES packet, a header of the tenth ES packet may be parsed, and after the length of the encoded data of the audio signal is determined, the encoded data of the audio signal may be read from the tenth ES packet based on the length of the encoded data of the audio signal. Then, the encoded data of the audio signal is sent to the audio decoder.

S706: Decode the audio bitstream based on the decoding model, to obtain a reconstructed audio signal.

For example, when the decapsulation module sends the audio bitstream to the audio decoder, after reading the reconstructed decoding model, the audio decoder may first read the encoded data of the audio signal from the audio bitstream, and then decode the encoded data of the audio signal based on the decoding model, to obtain the reconstructed audio signal. When the decapsulation module sends the encoded data of the audio signal to the audio decoding module, after reading the reconstructed decoding model, the audio decoding module may directly decode the encoded data of the audio signal based on the decoding model, to obtain the reconstructed audio signal.

It should be understood that, when N is equal to 1, after the model information bitstream is parsed out from the 1^{st} ninth ES packet, model reconstruction may be performed to obtain the decoding model. Then, the audio decoder may decode the 1^{st} audio bitstream based on the decoding model, to obtain a 1^{st} frame of the reconstructed audio signal. Then, each time the second electronic device receives a tenth ES packet (a 2^{nd} first ES packet to an M^{th} first ES packet), the audio decoder may perform real-time decoding on the tenth ES packet, to obtain a 2^{nd} frame to an M^{th} frame of the reconstructed audio signal.

When N is greater than 1, the second electronic device can perform model reconstruction based on the N sub-bitstreams only after parsing out the N sub-bitstreams from the 1^{st} to the N^{th} ninth ES packets, to obtain the decoding model. Then, the audio decoder may decode the 1^{st} to the N^{th} audio bitstreams based on the decoding model, to obtain a 1^{st} frame to an N^{th} frame of the reconstructed audio signal. Then, each time the second electronic device receives a tenth ES packet (an (M-N+1)^{th} first ES packet to an M^{th} first ES packet), the audio decoder may perform real-time decoding on the tenth ES packet, to obtain an (M-N+1)^{th} frame to an M^{th} frame of the reconstructed audio signal. To be specific, in this case, decoding of the audio bitstream in the N frames of ninth ES packets by the audio decoder is delayed, or a decoding delay of the audio decoder is N frames.

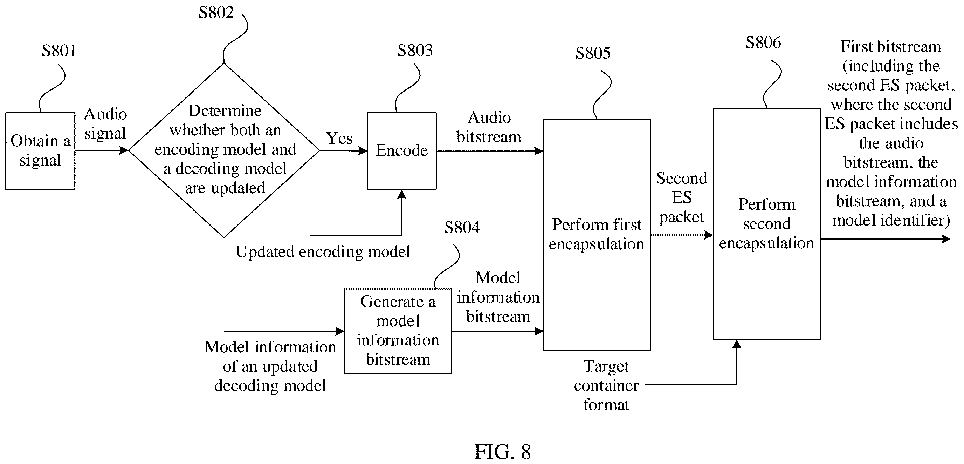

FIG. 8 illustrates an audio encoding process. In FIG. 8, a target bitstream type is a second type. An audio bitstream and a model information bitstream may be encapsulated into a same ES packet, and the ES packet is encapsulated according to a target container format, to obtain a first bitstream.

S801: Obtain an audio signal.

S802: Determine whether both an encoding model and a decoding model are updated.

S803: Encode the audio signal based on an updated encoding model when both the encoding model and the decoding model are updated, to obtain an audio bitstream.

S804: Generate a model information bitstream based on model information of an updated decoding model, where the updated decoding model corresponds to the updated encoding model.

S805: Encapsulate the model information bitstream and the audio bitstream into a second ES packet.

For example, for S801 to S805, refer to the foregoing descriptions of S601 to S605. Details are not described herein again. A format of the second ES packet is similar to a format of a first ES packet, that is, M second ES packets include N ninth ES packets and M-N tenth ES packets. Details are not described herein again.

S806: Encapsulate the second ES packet according to a target container format, to obtain a first bitstream.

For example, the second ES packet may be encapsulated according to the target container format, and a type of the second ES packet is set to an audio type, to obtain the first bitstream.

In a process of encapsulating the second ES packet according to the target container format, a type identifier of the ES packet may be set to a first identifier value, where the first identifier value represents that the type of the ES packet is an audio type. The type identifier may be a field that is in the target container format and that represents a type of an ES packet.

For example, in the embodiment in FIG. 8, in a possible manner, a model identifier may be an ES field. For details, refer to the description in the foregoing embodiment in FIG. 6A. Details are not described herein again.

In a possible manner, in the process of encapsulating the second ES packet according to the target container format, a field (the field is a field in the target container format) in additional information may be used as the model identifier, and a value of the model identifier is set to a preset identifier value. For example, the target container format is TS/MP4, the field, for example, an nn_type field, in the additional information may be used as the model identifier, and a field value of the nn_type field is set to the preset identifier value. For details, refer to the description in the foregoing embodiment in FIG. 6A. Details are not described herein again. In this way, a second electronic device can determine, without parsing the ES packet, whether a decoding model needs to be reconstructed.

The ES packet may be divided into a plurality of small packets, and then the small packets are encapsulated according to the target container format. This facilitates bitstream delivery of a bitstream delivery device and synchronous audio and video control.

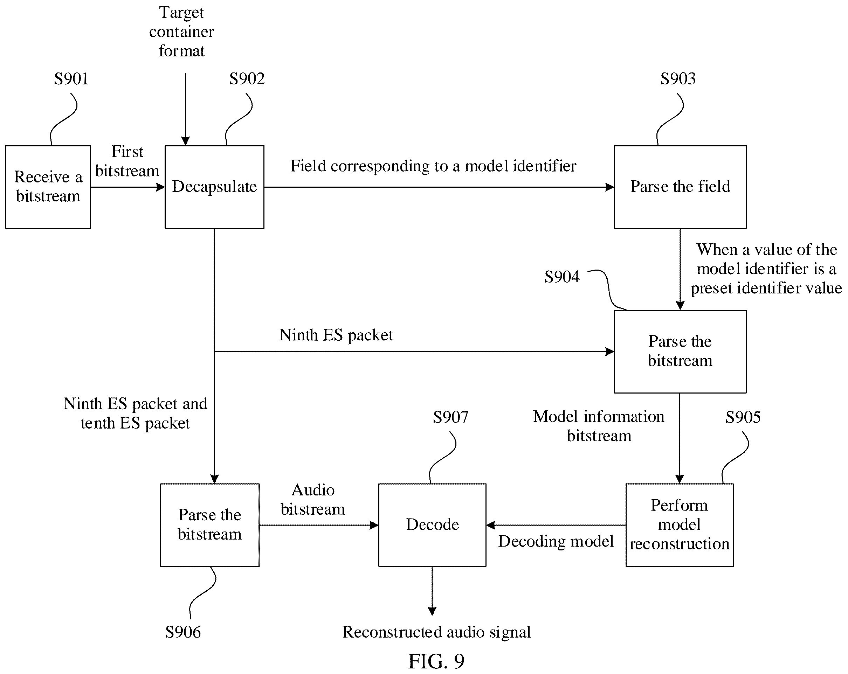

FIG. 9 illustrates an audio decoding process. FIG. 9 shows an audio decoding process corresponding to the audio encoding process in FIG. 8.

S901: Receive the first bitstream.

For example, when a first electronic device performs encoding according to the audio encoding method in the embodiment in FIG. 8, it is assumed that the target container format is the TS format, the first bitstream received by the second electronic device is essentially a TS stream; or it is assumed that the target container format is the MP4 format, the first bitstream received by the second electronic device is essentially an MP4 stream. This application is described by using an example in which the first bitstream is a TS stream.

For example, when the model identifier is a field in the target container format, for a process of parsing out the model identifier from the first bitstream, refer to S902 and S903.

S902: Decapsulate the first bitstream according to the target container format, to obtain a field corresponding to the model identifier.

S903: Parse the field corresponding to the model identifier, to obtain a value of the model identifier.

For example, after the second electronic device receives the first bitstream, the decapsulation module may decapsulate the first bitstream, to obtain the field corresponding to the model identifier and the M second ES packets (the M second ES packets include N ninth ES packets and M-N tenth ES packets). Then, the decapsulation module may parse the field corresponding to the model identifier, to obtain the value of the model identifier.

For example, when the model identifier is an ES field, the value of the model identifier may be parsed out from the field corresponding to the model identifier in the ES packet. For this, refer to the foregoing description of S702. Details are not described herein again.

S904: Read the model information bitstream from the ninth ES packet when the value of the model identifier is the preset identifier value.

S905: Perform model reconstruction based on the model information bitstream, to obtain the decoding model.

S906: Read the audio bitstream from the ninth ES packet, and use the tenth ES packet as the audio bitstream.

S907: Decode the audio bitstream based on the decoding model, to obtain a reconstructed audio signal.

For example, for S904 to S907, refer to the foregoing descriptions of S503 to S506. Details are not described herein again.

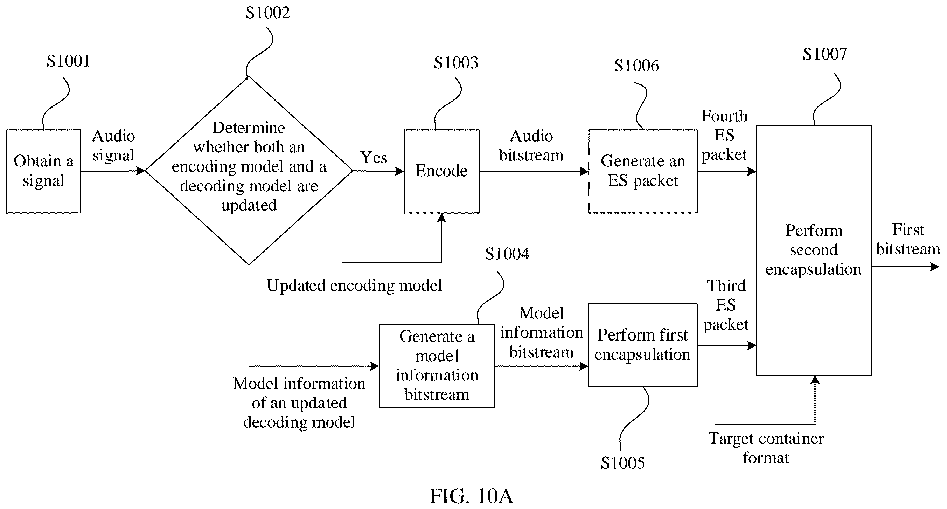

FIG. 10A illustrates an audio encoding process. In FIG. 10A, a target bitstream type is a second type. An audio bitstream and a model information bitstream may be encapsulated into different ES packets respectively, and an ES packet of the model information bitstream and an ES packet of the audio bitstream are encapsulated together according to a target container format, to obtain a first bitstream.

S1001: Obtain an audio signal.

S 1002: Determine whether both an encoding model and a decoding model are updated.

S1003: Encode the audio signal based on an updated encoding model when both the encoding model and the decoding model are updated, to obtain an audio bitstream.

S1004: Generate a model information bitstream based on model information of an updated decoding model, where the updated decoding model corresponds to the updated encoding model.

For example, for S1001 to S1004, refer to the foregoing descriptions of S601 to S604. Details are not described herein again.

S1005: Encapsulate the model information bitstream into a third ES packet.

For example, the model information may be divided into N information groups. Then, one information group is encapsulated into one third ES packet. In this way, N third ES packets can be obtained.

For example, when N is equal to 1, there is one third ES packet, and the third ES packet includes the model information bitstream and description information of the model information. For details, refer to the description in the foregoing embodiment. Details are not described herein again.

For example, when N is greater than 1, there are N third ES packets, and each third ES packet includes a sub-bitstream and description information of the sub-bitstream. For details, refer to the description in the foregoing embodiment. Details are not described herein again.

S1006: Use the audio bitstream as a fourth ES packet.

For example, one audio bitstream may be used as one fourth ES packet. In this way, N fourth ES packets can be obtained.

S1007: Encapsulate the third ES packet and the fourth ES packet according to the target container format, set a type of the third ES packet to a preset type, and set a type of the fourth ES packet to an audio type, to obtain a first bitstream.

For example, in a process of encapsulating the fourth ES packet and the third ES packet according to the target container format, a type identifier of the fourth ES packet may be set to a first identifier value, where the first identifier value represents that the type of the ES packet is the audio type.

For example, in a process of encapsulating the fourth ES packet and the third ES packet according to the target container format, a type identifier of the third ES packet may be set to a second identifier value, where the second identifier value represents that the type of the ES packet is the preset type. A model identifier represents that an ES packet includes the model information bitstream or a sub-bitstream. For details, refer to the descriptions in the foregoing embodiment. Details are not described herein again.

In a possible manner, the preset type may be a private type. In this case, a private type identifier corresponding to the third ES packet may include a private_stream_id_1 and a private_stream_id_2. Correspondingly, the private type identifier private_stream_id_1 corresponding to the third ES packet may be set to 0xBD, or the private type identifier private_stream_id_2 corresponding to the third ES packet may be set to 0xBF.

In a possible manner, the preset type may be a user-defined type. In this case, a user-defined type identifier corresponding to the third ES packet may include stream_id and stream_type. The user-defined type identifiers stream_id and stream_type corresponding to the third ES packet may be set to the second identifier value.

For example, in the embodiment in FIG. 10A, the model identifier may be an ES field, or may be a field in the target container format. This is not limited in this application. For details, refer to the foregoing descriptions. Details are not described herein again.

For example, when the model identifier is an ES field, the model identifier may be located in at least one third ES packet, or may be located in at least one fourth ES packet.

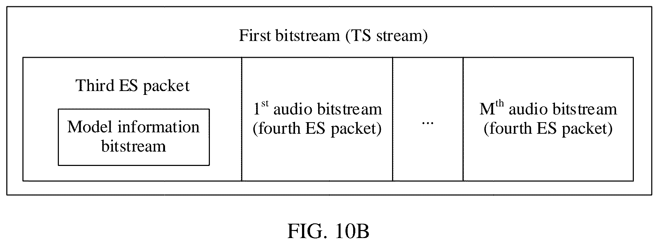

Refer to FIG. 10B. For example, in FIG. 10B, the target container format is TS, where N=1; and the third ES packet and the fourth ES packet may be encapsulated into a TS stream. In this case, the first bitstream is the TS stream.

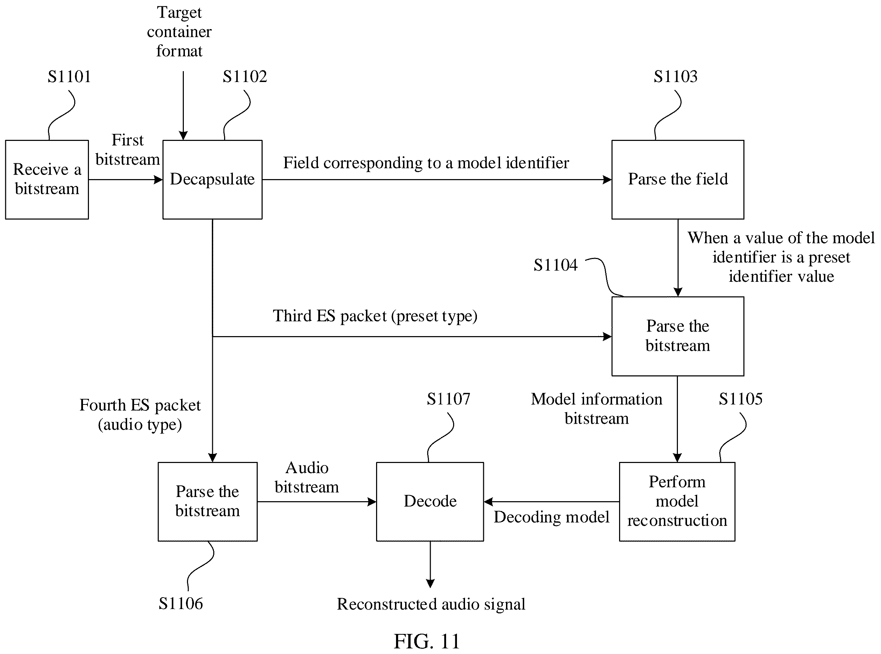

FIG. 11 illustrates an audio decoding process. FIG. 11 shows an audio decoding process corresponding to the audio encoding process in FIG. 10A.

S1101: Receive the first bitstream.

For example, when the model identifier is the field in the target container format, for a process of parsing out the model identifier from the first bitstream, refer to S1102 and S1103.

S1102: Decapsulate the first bitstream according to the target container format, to obtain a field corresponding to the model identifier, the third ES packet, and the fourth ES packet.

For example, the first bitstream is decapsulated according to the target container format, to obtain the field corresponding to the model identifier, a plurality of ES packets, and types of the ES packets. The decapsulation module may parse out a type identifier of each ES packet. When determining that the type identifier of the ES packet is the second identifier value, the decapsulation module may determine that a type of the ES is the preset type. In this case, the ES packet may be referred to as a third ES packet. For example, when determining that the type identifier of the ES packet is the first identifier value, the decapsulation model may determine that a type of the ES packet is the audio type. In this case, the ES packet may be referred to as a fourth ES packet.

S1103: Parse the field corresponding to the model identifier, to obtain a value of the model identifier.

S1104: Read the model information bitstream from the third ES packet when the value of the model identifier is a preset identifier value.

S1105: Perform model reconstruction based on the model information, to obtain the decoding model.

S1106: Read the audio bitstream from the fourth ES packet.

S1107: Decode the audio bitstream based on the decoding model, to obtain a reconstructed audio signal.

For example, for S1104 to S1107, refer to the foregoing descriptions of S703 to S706. Details are not described herein again.

In this way, compared with encapsulating the second bitstream and the third bitstream into a same ES packet, the second electronic device does not need to split the ES packet to parse out the second bitstream and the third bitstream, thereby reducing complexity of a parsing process.

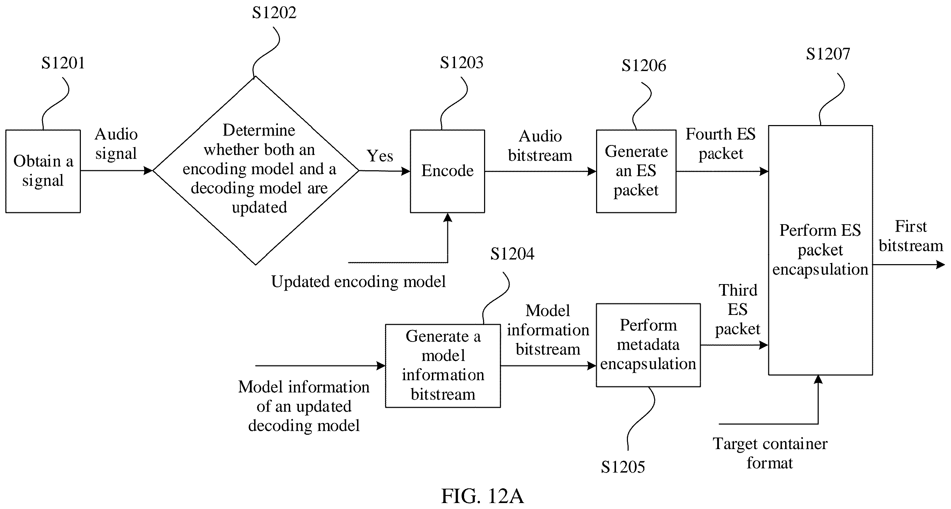

FIG. 12A illustrates an audio encoding process. In FIG. 12A, a target bitstream type is a second type. A model information bitstream may be encapsulated as metadata, and the model information bitstream and an audio bitstream are encapsulated into different ES packets respectively. Then, an ES packet of the model information bitstream and an ES packet of the audio bitstream are encapsulated together according to a target container format, to obtain a first bitstream.

S1201: Obtain an audio signal.

S1202: Determine whether both an encoding model and a decoding model are updated.

S1203: Encode the audio signal based on an updated encoding model when both the encoding model and the decoding model are updated, to obtain an audio bitstream.

S1204: Generate a model information bitstream based on model information of an updated decoding model, where the updated decoding model corresponds to the updated encoding model.

For example, for S1201 to S1204, refer to the foregoing descriptions of S601 to S604. Details are not described herein again.

S1205: Encapsulate the model information bitstream as metadata, to obtain a third ES packet.

For example, the model information may be divided into N information groups. Then, one information group is encapsulated into one third ES packet. In this way, N third ES packets can be obtained.

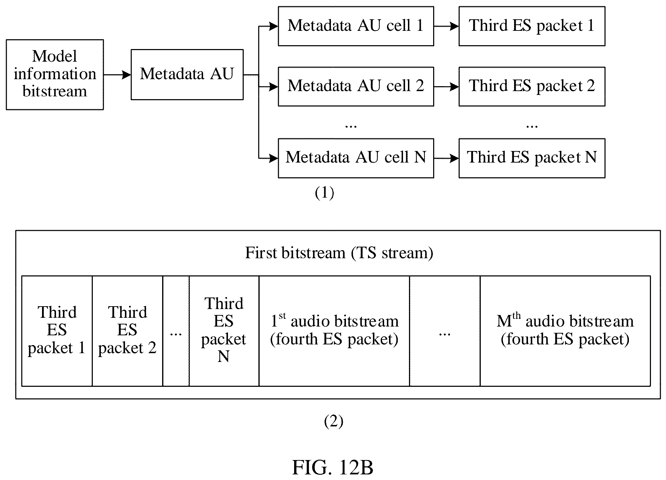

Refer to FIG. 12B. For example, the model information bitstream may be used as a metadata (metadata) AU (Access Unit, access unit). When N is equal to 1, one metadata AU may be used as one metadata AU cell (cell). Then, one metadata AU cell is encapsulated into one third ES packet, to obtain one third ES packet. When N is greater than 1, one metadata AU may be split into N metadata AU cells. Then, one metadata AU cell is encapsulated into one third ES packet, to obtain N third ES packets.

S1206: Use the audio bitstream as a fourth ES packet.

For example, one audio bitstream may be used as one fourth ES packet. In this way, N fourth ES packets can be obtained.

S1207: Encapsulate the third ES packet and the fourth ES packet according to a target container format, set a type of the third ES packet to a metadata type, and set a type of the fourth ES packet to an audio type, to obtain a first bitstream.

For example, the metadata type is one of the preset types in the embodiment in FIG. 11.

In (2) in FIG. 12B, the target container format is TS. Based on (1) in FIG. 12B, the N third ES packets and M fourth ES packets are encapsulated into one TS stream. In this way, the obtained first bitstream is a TS stream.

For example, in a process of encapsulating the fourth ES packet and the third ES packet according to the target container format, a type identifier of the fourth ES packet may be set to a first identifier value, and a type identifier of the third ES packet may be set to a third identifier value, where the third identifier value represents that the type of the ES packet is the metadata type.

In the embodiment in FIG. 12A, syntax of the metadata AU cell in the first bitstream may be further modified. It is assumed that the target container format is TS, that is, the first bitstream is a TS stream, the syntax of the metadata AU cell in the TS stream may be shown in Table 4 below:

**Table 4**

| Syntax | No. of bits | Mnemonic |
|---|---|---|
| Metadata_AU_cell () { | | |
| decoder_config_flag | 1 | bslbf |
| ... | | |
| } | | |

In Table 4, decoder_config_flag represents whether a current metadata AU includes initialization information of a decoder. In the embodiment in FIG. 12A, an identifier value of decoder_config_flag in syntax of a metadata AU cell split from the metadata AU corresponding to the model information bitstream is set to 1, to indicate that the model update information is information required for initialization of an audio decoder.

In the embodiment in FIG. 12A, a model identifier may be an ES field, or may be a field in the target container format. This is not limited in this application.

For example, when the model identifier is an ES field, the model identifier may be located in at least one third ES packet, or may be located in at least one fourth ES packet.

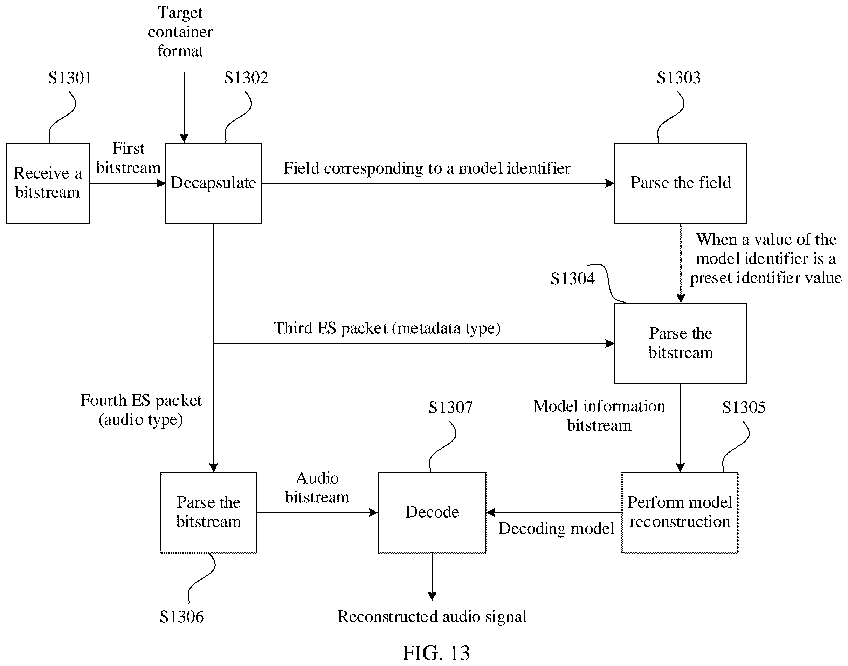

FIG. 13 illustrates an audio decoding process. FIG. 13 shows an audio decoding process corresponding to the audio encoding process in FIG. 12A.

S1301: Receive the first bitstream.

S1302: Decapsulate the first bitstream according to the target container format, to obtain a field corresponding to the model identifier, the third ES packet, and the fourth ES packet.

For example, the first bitstream is decapsulated according to the target container format, to obtain the field corresponding to the model identifier, a plurality of ES packets, and types of the ES packets. A decapsulation module may parse out a type identifier of each ES packet. When determining that the type identifier of the ES packet is the third identifier value, the decapsulation module may determine that a type of the ES is the metadata type. In this case, the ES packet may be referred to as a third ES packet. For example, when determining that the type identifier of the ES packet is the first identifier value, the decapsulation model may determine that a type of the ES packet is the audio type. In this case, the ES packet may be referred to as a fourth ES packet.

S1303: Parse the field corresponding to the model identifier, to obtain a value of the model identifier.

For example, for S1301 to S1303, refer to the foregoing descriptions of S1101 to S1103. Details are not described herein again.

S1304: Read the model information bitstream from the third ES packet when the value of the model identifier is a preset identifier value.

S1305: Perform model reconstruction based on the model information, to obtain the decoding model.

S 1306: Read the audio bitstream from the fourth ES packet.

S1307: Decode the audio bitstream based on the decoding model, to obtain a reconstructed audio signal.

For example, the decapsulation module may further parse out decoder_config_flag in the syntax of the metadata AU cell corresponding to the third ES packet. If decoder_config_flag is "1", the decoder may read the decoding model (that is, initialization), and then decode the audio bitstream based on the decoding model, to obtain the reconstructed audio signal.

For example, for S1305 to S1307, refer to the foregoing descriptions of S703 to S706. Details are not described herein again.

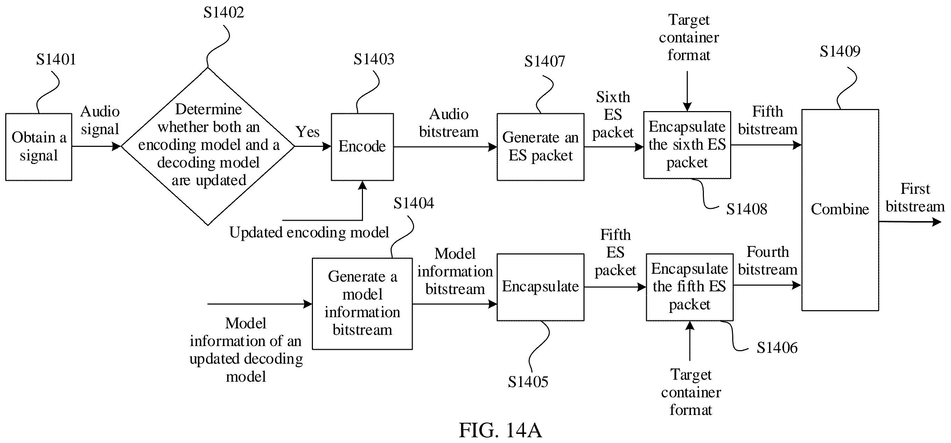

FIG. 14A illustrates an audio encoding process. In FIG. 14A, a target bitstream type is a second type. An audio bitstream and a model information bitstream may be encapsulated into different ES packets respectively, and an ES packet of the model information bitstream and an ES packet of the audio bitstream are separately encapsulated according to a target container format, to obtain a first bitstream.

S1401: Obtain an audio signal.

S1402: Determine whether both an encoding model and a decoding model are updated.

S1403: Encode the audio signal based on an updated encoding model when both the encoding model and the decoding model are updated, to obtain an audio bitstream.

S1404: Generate a model information bitstream based on model information of an updated decoding model, where the updated decoding model corresponds to the updated encoding model.

For example, for S1401 to S1404, refer to the foregoing descriptions of S601 to S604. Details are not described herein again.

S1405: Encapsulate the model information bitstream into a fifth ES packet.

S1406: Encapsulate the fifth ES packet according to a target container format, and set a type of the fifth ES packet to a preset type, to obtain a fourth bitstream.

For example, in a process of encapsulating the fifth ES packet according to the target container format, a type identifier of the ES packet may be set to a second identifier value.

For example, if the target container format is TS, the fifth ES packet is encapsulated into a TS stream, namely, the fourth bitstream.

S1407: Use the audio bitstream as a sixth ES packet.

S1408: Encapsulate the sixth ES packet according to the target container format, and set a type of the sixth ES packet to an audio type, to obtain a fifth bitstream.

For example, one audio bitstream may be used as one sixth ES packet. In this way, N sixth ES packets can be obtained.

For example, in a process of encapsulating the sixth ES packet according to the target container format, a type identifier of the sixth ES packet may be set to a first identifier value.

For example, if the target container format is TS, the sixth ES packet is encapsulated into a TS stream, namely, the fifth bitstream.

S1409: Combine the fourth bitstream and the fifth bitstream, to obtain a first bitstream.

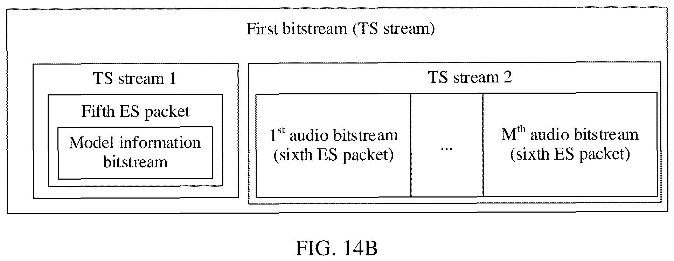

Refer to FIG. 14B. The target container format is TS, and the first bitstream is a TS stream. The first bitstream may include two TS streams: a TS stream 1 and a TS stream 2, where the TS stream 1 is the fourth bitstream, and the TS stream 1 is the fifth bitstream.

For example, in the embodiment in FIG. 14A, an identifier may be a field value of an ES field, or may be a field value of a field corresponding to the target container format. This is not limited in this application. For details, refer to the foregoing descriptions. Details are not described herein again.

For example, when the model identifier is a field in the target container format, the model identifier may be located in the fourth bitstream, or may be located in the fifth bitstream.

For example, when the model identifier is an ES field, the model identifier may be located in at least one fifth ES packet, or may be located in at least one sixth ES packet.

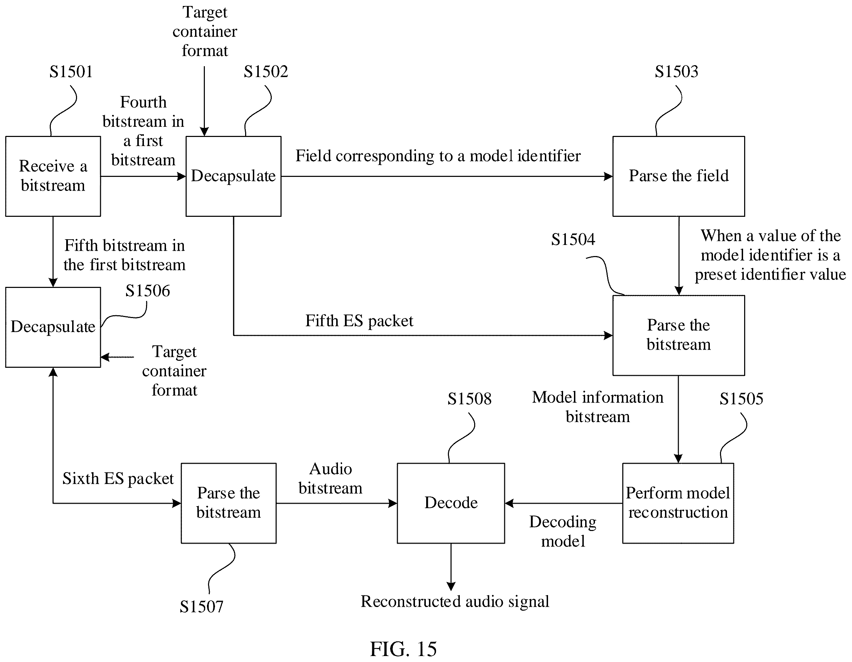

FIG. 15 illustrates an audio decoding process. FIG. 15 shows an audio decoding process corresponding to the audio encoding process in FIG. 14A.

S1501: Receive the first bitstream.

For example, when a first electronic device performs encoding according to the audio encoding method in the embodiment in FIG. 14A, it is assumed that the target container format is TS, the first bitstream received by a second electronic device is essentially a TS stream; or it is assumed that the target container format is MP4, the first bitstream received by a second electronic device is essentially an MP4 stream.

In this case, the first bitstream may include the fourth bitstream and the fifth bitstream.

For example, when the model identifier is the field in the target container format, and the fourth bitstream includes a field corresponding to the model identifier, for a process of parsing out a value of the model identifier from the first bitstream, refer to S1502 and S1503.

S1502: Decapsulate the fourth bitstream according to the target container format to obtain the field corresponding to the model identifier and the fifth ES packet.

The following uses an example in which the first bitstream is a TS stream for description.

For example, after the second electronic device receives the first bitstream, a decapsulation module may decapsulate each TS stream according to the target container format, to obtain an ES packet and a type of the ES packet; and decapsulate a part of the TS streams, to further obtain the field corresponding to the model identifier.

For example, when the type of the ES packet is the preset type, it may be determined that the corresponding TS stream is the fourth bitstream, and the corresponding ES packet is the fifth ES packet. When the type of the ES packet is the audio type, it may be determined that the corresponding TS stream is the fifth bitstream and the corresponding ES packet is the sixth ES packet.

S1503: Parse the field corresponding to the model identifier, to obtain the value of the model identifier.

S1504: Read the model information bitstream from the fifth ES packet when the value of the model identifier is a preset identifier value.

S1505: Perform model reconstruction based on the model information, to obtain the decoding model.

S1506: Decapsulate the fifth bitstream according to the target container format, to obtain the sixth ES packet.

S1507: Read the audio bitstream from the sixth ES packet.

S1508: Decode the audio bitstream based on the decoding model, to obtain a reconstructed audio signal.

For example, for S1503 to S1508, refer to the foregoing descriptions of S703 to S706. Details are not described herein again.

In this way, compared with encapsulating the second bitstream and the third bitstream into a same TS stream, the second electronic device does not need to split the TS stream to parse out the second bitstream and the third bitstream, thereby reducing complexity of a parsing process.

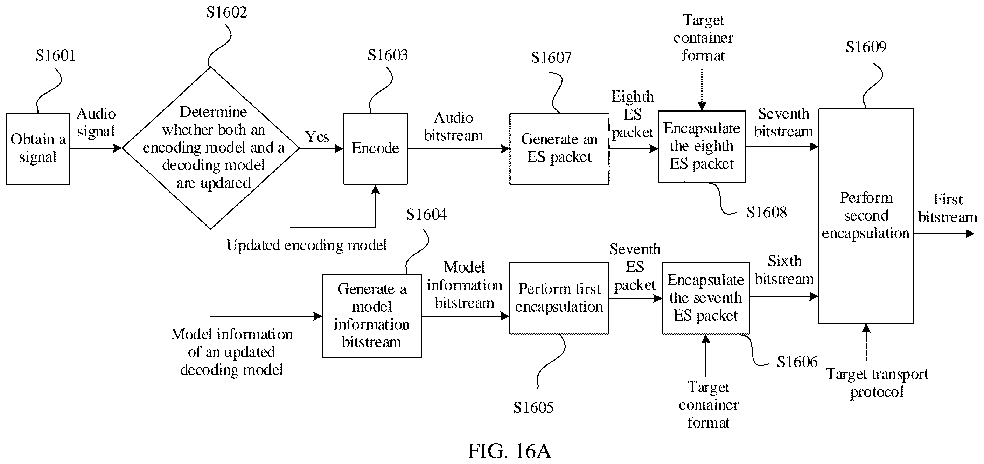

FIG. 16A illustrates an audio encoding process. In FIG. 16A, a target bitstream type is a third type. After an audio bitstream and a model information bitstream are encapsulated into different ES packets respectively, and an ES packet of the model information bitstream and an ES packet of the audio bitstream are separately encapsulated according to the target container format to obtain a sixth bitstream and a seventh bitstream, the sixth bitstream and the seventh bitstream are encapsulated according to a target transport protocol, to obtain a first bitstream.

S1601: Obtain an audio signal.

S1602: Determine whether both an encoding model and a decoding model are updated.

S1603: Encode the audio signal based on an updated encoding model when both the encoding model and the decoding model are updated, to obtain an audio bitstream.

S1604: Generate a model information bitstream based on model information of an updated decoding model, where the updated decoding model corresponds to the updated encoding model.

For example, for S1601 to S1604, refer to the foregoing descriptions of S601 to S604. Details are not described herein again.

S1605: Encapsulate the model information bitstream into a seventh ES packet.

S1606: Encapsulate the seventh ES packet according to a target container format, and set a type of the seventh ES packet to a preset type, to obtain a sixth bitstream.

S1607: Use the audio bitstream as an eighth ES packet.

S1608: Encapsulate the eighth ES packet according to the target container format, and set a type of the eighth ES packet to an audio type, to obtain a seventh bitstream.

S1609: Encapsulate the sixth bitstream and the seventh bitstream according to the target transport protocol, to obtain a first bitstream.

For example, when the target transport protocol is the HTTP (Hyper Text Transfer Protocol, hyper text transfer protocol), the first bitstream may be an HLS stream. In this case, the first bitstream may include an index file, the sixth bitstream, and the seventh bitstream.

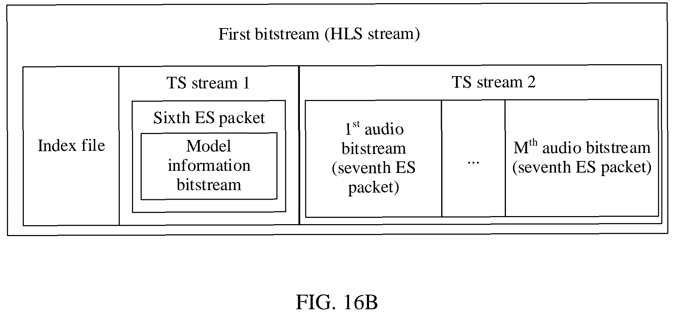

Refer to FIG. 16B. The target transport protocol is HLS, the target container format is TS, and the first bitstream is an HLS stream. The first bitstream may include two TS streams encapsulated according to HLS: a TS stream 1 and a TS stream 2, where the TS stream 1 is the sixth bitstream, and the TS stream 1 is the seventh bitstream.

For example, in a decoding process, information in the index file is usually parsed out in sequence from the beginning to the end of the index file. Therefore, to ensure that the decoding model is reconstructed before the audio bitstream is obtained, index information of the sixth bitstream may be set in the index file before index information of all seventh bitstreams.

For example, the index file further includes a plurality of tags such as an initialization tag. The initialization tag indicates how to obtain media initialization information (Media Initialization Section). The media initialization information may be information that needs to be first parsed before a media bitstream (for example, an audio bitstream) is decoded. Further, the index information of the sixth bitstream may be used as attribute information of the initialization tag.

For example, the index information may be, for example, a uniform resource locator (Uniform Resource Locator, URL). This is not limited in this application.

For example, in the embodiment in FIG. 16A, a model identifier may be an ES field, or may be a field in the target container format. This is not limited in this application. For details, refer to the foregoing descriptions. Details are not described herein again.

For example, when the model identifier is a field in the target container format, the model identifier may be located in the sixth bitstream, or may be located in the seventh bitstream.

For example, when the model identifier is an ES field, the model identifier may be located in at least one seventh ES packet, or may be located in at least one eighth ES packet.

In the embodiment in FIG. 16A, a model identifier may alternatively be a field in the target transport protocol.

It should be noted that, the first bitstream in the embodiment in FIG. 16A is different from the first bitstream in the embodiment in FIG. 14A. The first bitstream in the embodiment in FIG. 14A includes only the sixth bitstream and the seventh bitstream. In addition to the sixth bitstream and the seventh bitstream, the first bitstream in the embodiment in FIG. 16A further includes the field in the target transport protocol.

Second bitstreams with different reconstruction precision (which may be understood as precision of reconstructed signals obtained by decoding the second bitstream) may be generated. In this way, a bitstream delivery device can distribute, based on a bandwidth, the first bitstream including the second bitstreams with different reconstruction precision, thereby ensuring smoothness of playing the reconstructed signal.

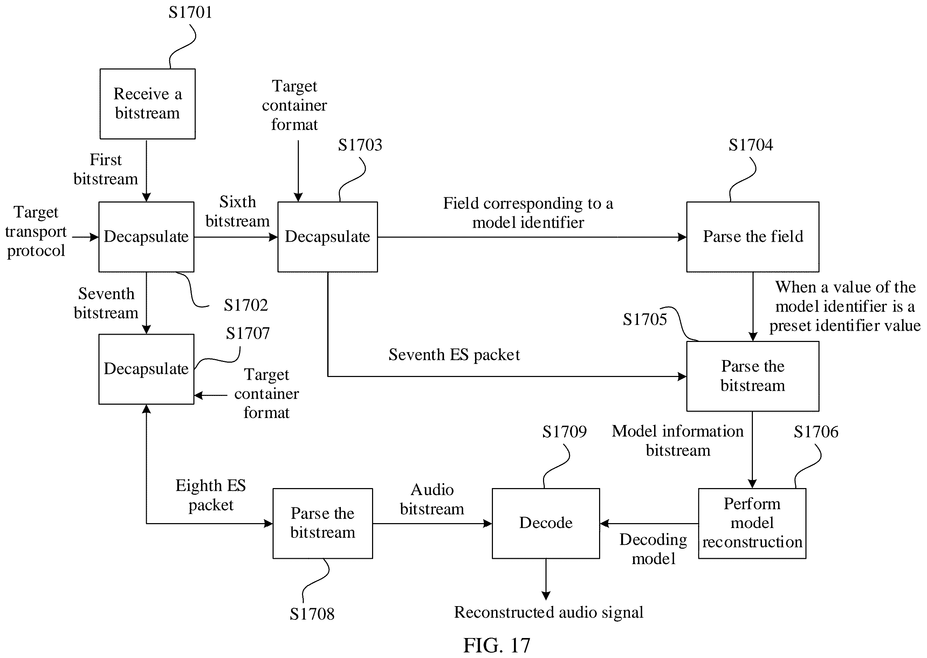

FIG. 17 illustrates an audio decoding process. FIG. 17 shows an audio decoding process corresponding to the audio encoding process in FIG. 16A.

S1701: Receive the first bitstream.

S1702: Decapsulate the first bitstream according to the target transport protocol, to obtain the sixth bitstream and the seventh bitstream.

For example, when the target transport protocol is the HTTP, the first bitstream may be decapsulated according to the HTTP, to obtain the index file and a plurality of bitstreams.

In a possible manner, the index information of the sixth bitstream may be read from the index file, and then the sixth bitstream is determined from the plurality of bitstreams based on the index information of the sixth bitstream; and the index information of the seventh bitstream may be read from the index file, and then the seventh bitstream is determined from the plurality of bitstreams based on the index information of the seventh bitstream.

In a possible manner, the index information of the seventh bitstream may be read from the index file, and then the seventh bitstream is determined from the plurality of bitstreams based on the index information of the seventh bitstream; and the index information of the sixth bitstream may be read from the attribute information of the initialization tag of the index file, and the sixth bitstream is obtained from the plurality of bitstreams based on the index information of the sixth bitstream.

S1703: Decapsulate the sixth bitstream according to the target container format, to obtain a field corresponding to the model identifier and the seventh ES packet.

S1704: Parse the field corresponding to the model identifier, to obtain a value of the model identifier.

S 1705: Read the model information bitstream from the seventh ES packet when the value of the model identifier is a preset identifier value.

S1706: Perform model reconstruction based on the model information, to obtain the decoding model.

S1707: Decapsulate the seventh bitstream according to the target container format, to obtain the eighth ES packet.

S1708: Read the audio bitstream from the eighth ES packet.

S1709: Decode the audio bitstream based on the decoding model, to obtain a reconstructed audio signal.

For example, for S1703 to S1709, refer to the foregoing descriptions of S1502 to S1508. Details are not described herein again.

In a possible manner, a first electronic device may transmit index information corresponding to model information of the decoding model to a second electronic device. Specifically, the index information corresponding to the model information of the decoding model may be determined, and then the first bitstream is obtained based on a second bitstream and the index information corresponding to the model information of the decoding model. In this case, the preset identifier value represents that the first bitstream includes the index information corresponding to the model information of the decoding model. In a decoding process, a process in which the second electronic device obtains the model information of the decoding model may be as follows: parsing out the index information of the model information from the first bitstream; and obtaining the model information based on the index information of the model information. In other words, in this case, the preset identifier value indicates the second electronic device to obtain the model information of the decoding model based on the index information obtained from the first bitstream.

For example, in a possible manner of obtaining the first bitstream based on the second bitstream and the index information corresponding to the model information of the decoding model, the second bitstream may be used as a third ES packet, and the third ES packet is encapsulated according to the target container format, to obtain the fifth bitstream; and the fifth bitstream is encapsulated according to the target transport protocol to obtain the first bitstream. In this case, the first bitstream may include the index file and the fifth bitstream, and the index information of the decoding model may be added to the index file. In a possible manner, the index information of the decoding model may be added before index information of the fifth bitstream. In a possible manner, the index information corresponding to the model information of the decoding model may be used as the attribute information of the initialization tag in the index file.

Compared with carrying the model information bitstream in the first bitstream, carrying only the index information corresponding to the model information of the decoding model in the first bitstream has fewer bit rate overheads, and can reduce a bandwidth requirement on the first electronic device.

For example, in a possible manner of obtaining the first bitstream based on the second bitstream and the index information corresponding to the model information of the decoding model, an eighth bitstream may be generated based on the index information corresponding to the model information of the decoding model; and the eighth bitstream and the second bitstream are encapsulated, to obtain the first bitstream. For a manner of encapsulating the eighth bitstream and the second bitstream to obtain the first bitstream, refer to the foregoing manner of encapsulating the third bitstream and the second bitstream to obtain the first bitstream. Details are not described herein again.

In a possible manner, a first electronic device and a second electronic device may pre-agree on a preset storage location that is in a third device and that is used to store the updated encoding model and the updated decoding model. In this way, the first electronic device does not need to send the model information bitstream of the decoding model or the index information corresponding to the model information of the decoding model. In this case, after the decoding model and the encoding model are updated at the preset storage location in the third device, the value of the model identifier in the first bitstream may be set to the preset identifier value. In this case, the preset identifier value represents that the model information of the decoding model is stored at the preset storage location in the third device. In this way, the second electronic device can obtain the model information of the decoding model from the preset storage location in the third device, that is, the preset identifier value indicates the second electronic device to obtain the model information of the decoding model from the preset storage location in the third device. In this case, the first bitstream does not need to transmit the model information bitstream or the index information corresponding to the model information, so that bit rate overheads can be reduced, and a bandwidth requirement on the first electronic device can be reduced.

It should be noted that it is assumed that a manner in which the second electronic device obtains the model information from the first bitstream is referred to as a first manner; a manner in which the second electronic device obtains the model information based on the index information corresponding to the model information from the first bitstream is referred to as a second manner; and a manner in which the second electronic device obtains the model information from the preset storage location in the third electronic device is referred to as a third manner. In a possible manner, the first electronic device and the second electronic device may agree in advance on a manner in which the second electronic device obtains the model information of the decoding model. In encoding and decoding processes, when the first electronic device and the second electronic device agree on the first manner, the first electronic device may generate the third bitstream based on the model information of the decoding model, and encapsulate the second bitstream and the third bitstream, to obtain the first bitstream. In encoding and decoding processes, when the first electronic device and the second electronic device agree on the second manner, the first electronic device may generate the first bitstream based on the second bitstream and the index information corresponding to the model information of the decoding model. In encoding and decoding processes, when the first electronic device and the second electronic device agree on the third manner, the first electronic device may generate the first bitstream based on the second bitstream.

In a possible manner, in encoding and decoding processes, the first electronic device may select one manner from the first manner, the second manner, and the third manner as a target manner. When the target manner is the first manner, the first electronic device may generate the third bitstream based on the model information of the decoding model, and encapsulate the second bitstream and the third bitstream, to obtain the first bitstream. When the target manner is the second manner, the first electronic device may generate the first bitstream based on the second bitstream and the index information corresponding to the model information of the decoding model. When the target manner is the third manner, the first electronic device may generate the first bitstream based on the second bitstream.

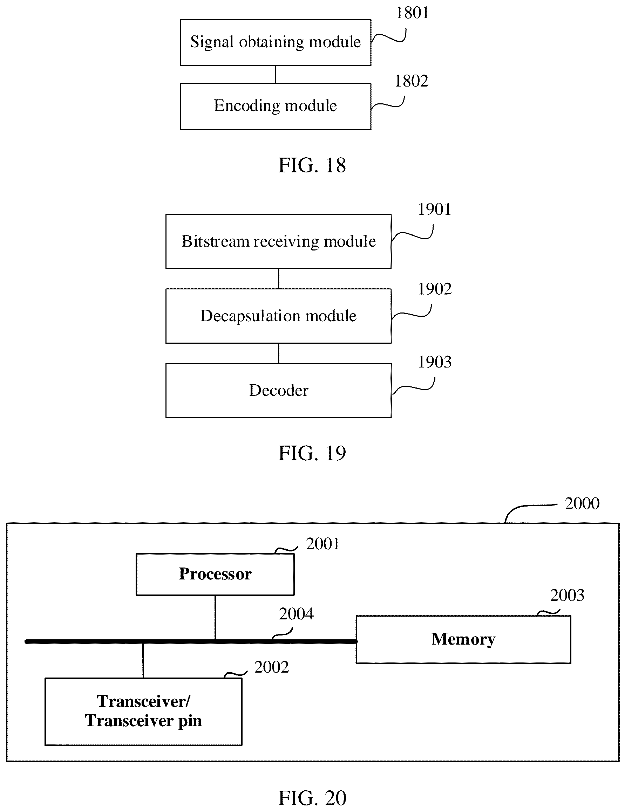

FIG. 18 illustrates an encoding apparatus. The encoding apparatus may be configured to perform the encoding methods in the foregoing embodiments. Therefore, for beneficial effects that can be achieved by the encoding apparatus, refer to beneficial effects in the corresponding methods provided above. Details are not described herein again.

Refer to FIG. 18. For example, the encoding apparatus may include:
a signal obtaining module 1801, configured to obtain a to-be-encoded signal; and
an encoding module 1802, configured to generate a first bitstream, where the first bitstream includes a model identifier and a second bitstream, the second bitstream is obtained by encoding the to-be-encoded signal based on an encoding model, a value of the model identifier is a preset identifier value, the preset identifier value indicates a second electronic device to obtain model information of a decoding model, and the decoding model corresponds to the encoding model.

It should be understood that the encoding apparatus may further perform another step in the foregoing encoding methods. Details are not described herein again.

FIG. 19 illustrates a decoding apparatus. The decoding apparatus may be configured to perform the decoding methods in the foregoing embodiments. Therefore, for beneficial effects that can be achieved by the decoding apparatus, refer to beneficial effects in the corresponding methods provided above. Details are not described herein again.

Refer to FIG. 19. For example, the decoding apparatus may include:
a bitstream receiving module 1901, configured to receive a first bitstream, where the first bitstream includes a model identifier and a second bitstream, and the second bitstream is generated based on encoded information;
a decapsulation module 1902, configured to obtain model information of a decoding model when a value of the model identifier is a preset identifier value, where
the decapsulation module 1902 is further configured to perform model reconstruction based on the model information, to obtain a decoding model; and
a decoder 1903, configured to decode the second bitstream based on the decoding model, to obtain a reconstructed signal.

It should be understood that the decoding apparatus may further perform another step in the foregoing decoding methods. Details are not described herein again.

In an example, FIG. 20 is a block diagram of an apparatus 2000 according to an embodiment of this application. The apparatus 2000 may include a processor 2001 and a transceiver/transceiver pin 2002. Optionally, the apparatus 2000 further includes a memory 2003.

Components of the apparatus 2000 are coupled together through a bus 2004. In addition to a data bus, the bus 2004 further includes a power bus, a control bus, and a status signal bus. However, for clear description, various buses are referred to as the bus 2004 in the figure.

Optionally, the memory 2003 may be configured to store instructions in the foregoing method embodiments. The processor 2001 may be configured to: execute the instructions in the memory 2003, control a receiving pin to receive a signal, and control a sending pin to send a signal.

The apparatus 2000 may be the electronic device or a chip of the electronic device in the foregoing method embodiments. The electronic device may include the first electronic device and the second electronic device.

All related content of the steps in the foregoing method embodiments may be cited in function descriptions of the corresponding functional modules. Details are not described herein again.

An embodiment of this application further provides a chip, including one or more interface circuits and one or more processors. The one or more processors receive or send data via the one or more interface circuits. When the one or more processors execute computer instructions, an electronic device is enabled to perform the foregoing related method steps, to implement the methods in the foregoing embodiments. The interface circuit is a transceiver/transceiver pin 2002.

An embodiment further provides a computer-readable storage medium. The computer-readable storage medium stores computer instructions. When the computer instructions are run on an electronic device, the electronic device is enabled to perform the foregoing related method steps, to implement the methods in the foregoing embodiments.

An embodiment further provides a computer program product. The computer program product includes computer instructions. When the computer instructions are executed by a computer or a processor, the computer is enabled to perform the foregoing related steps, to implement the methods in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the methods in the foregoing method embodiments.

The electronic device, the computer-readable storage medium, the computer program product, or the chip provided in embodiments is configured to perform the corresponding methods provided above. Therefore, for beneficial effects that can be achieved, refer to the beneficial effects of the corresponding methods provided above. Details are not described herein again.

Based on the descriptions of the foregoing implementations, it may be understood by a person skilled in the art that, for ease and brevity of description, division into the foregoing functional modules is merely used as an example for description. During actual application, the foregoing functions may be allocated to different functional modules for implementation based on a requirement, that is, an internal structure of an apparatus is divided into different functional modules, to implement all or a part of the functions described above.

In the several embodiments provided in this application, it should be understood that the disclosed apparatus and method may be implemented in other manners. For example, the described apparatus embodiment is merely an example. For example, division into modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may be one or more physical units. To be specific, the parts may be located in one place, or may be distributed in a plurality of different places. A part or all of the units may be selected based on actual requirements to achieve the objectives of the solutions in embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

Any content in embodiments of this application and any content in a same embodiment can be freely combined. Any combination of the foregoing content shall fall within the scope of this application.

When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technology, or all or a part of the technical solutions may be implemented in a form of a software product. The software product is stored in a storage medium, and includes a plurality of instructions for instructing a device (which may be a single-chip microcomputer, a chip, or the like) or a processor (processor) to perform all or a part of the steps of the methods in embodiments of this application. The storage medium includes any medium that can store program code, such as a USB flash drive, a removable hard disk, a read-only memory (read-only memory, ROM), a random access memory (random access memory, RAM), a magnetic disk, or an optical disc.

The foregoing describes embodiments of this application with reference to the accompanying drawings. However, this application is not limited to the foregoing specific implementations. The foregoing specific implementations are merely examples instead of limitations. Inspired by this application, a person of ordinary skill in the art may further make modifications without departing from the purposes of this application and the protection scope of the claims, and all the modifications shall fall within the protection of this application.

Methods or algorithm steps described in combination with the content disclosed in embodiments of this application may be implemented by hardware, or may be implemented by a processor by executing software instructions. The software instruction may include a corresponding software module. The software module may be stored in a random access memory (Random Access Memory, RAM), a flash memory, a read-only memory (Read-Only Memory, ROM), an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

A person skilled in the art should be aware that, in the foregoing one or more examples, functions described in embodiments of this application may be implemented by using hardware, software, firmware, or any combination thereof. When the functions are implemented by using software, the functions may be stored in a computer-readable medium or transmitted as one or more instructions or code in a computer-readable medium. The computer-readable medium includes a computer-readable storage medium and a communication medium, where the communication medium includes any medium that enables a computer program to be transmitted from one place to another. The storage medium may be any available medium accessible to a general-purpose or a dedicated computer.

The foregoing describes embodiments of this application with reference to the accompanying drawings. However, this application is not limited to the foregoing specific implementations. The foregoing specific implementations are merely examples instead of limitations. Inspired by this application, a person of ordinary skill in the art may further make modifications without departing from the purposes of this application and the protection scope of the claims, and all the modifications shall fall within the protection of this application.

## Claims

1. A decoding method, wherein the method comprises:
receiving a first bitstream, wherein the first bitstream comprises a model identifier and a second bitstream, and the second bitstream is generated based on an encoded signal;
obtaining model information when a value of the model identifier is a preset identifier value;
performing model reconstruction based on the model information, to obtain a decoding model; and
decoding the second bitstream based on the decoding model, to obtain a reconstructed signal.

2. The method according to claim 1, wherein when the value of the model identifier is the preset identifier value, the first bitstream further comprises a third bitstream, and the third bitstream is generated based on the model information of the decoding model; and
obtaining the model information comprises:
parsing out the third bitstream from the first bitstream; and
obtaining the model information of the decoding model based on the third bitstream.

3. The method according to claim 1, wherein when the value of the model identifier is the preset identifier value, the first bitstream further comprises index information corresponding to the model information of the decoding model; and
obtaining the model information comprises:
parsing out the index information corresponding to the model information of the decoding model from the first bitstream; and
obtaining the model information of the decoding model based on the index information corresponding to the model information of the decoding model.

4. The method according to claim 1, wherein the preset identifier value represents that the model information of the decoding model is stored at a preset storage location in a remote electronic device; and
obtaining the model information comprises:
obtaining the model information of the decoding model from the preset storage location.

5. The method according to any one of claims 1 to 4, wherein the model identifier is an elementary stream ES field; and the method further comprises:
parsing a field corresponding to the model identifier in the first bitstream, to obtain the value of the model identifier.

6. The method according to any one of claims 1 to 4, wherein a target bitstream type of the first bitstream is a type of a bitstream encapsulated according to a target container format or a type of a bitstream encapsulated according to a target transport protocol, and the model identifier is a field in the target container format; and the method further comprises:
decapsulating the first bitstream according to the target container format, to obtain a field corresponding to the model identifier; and
parsing the field corresponding to the model identifier, to obtain the value of the model identifier.

7. The method according to any one of claims 1 to 4, wherein a target bitstream type of the first bitstream is a type of a bitstream encapsulated according to a target transport protocol, and the model identifier is a field in the target transport protocol; and the method further comprises:
decapsulating the first bitstream according to the target transport protocol, to obtain a field corresponding to the model identifier; and
parsing the field corresponding to the model identifier, to obtain the value of the model identifier.

8. The method according to any one of claims 1 to 7, wherein the model identifier represents a type of the decoding model; the method further comprises:
when the value of the model identifier is the preset identifier value, determining whether there is a decoding model of a type corresponding to the preset identifier value; and
performing model reconstruction based on the model information, to obtain the decoding model comprises:
when there is no decoding model of the type corresponding to the preset identifier value, performing model reconstruction based on the model information, to obtain the decoding model of the type corresponding to the preset identifier value.

9. The method according to claim 2, wherein parsing out the third bitstream from the first bitstream comprises:
parsing the first bitstream according to the target bitstream type of the first bitstream, to obtain the third bitstream.

10. The method according to claim 9, wherein the target bitstream type is an ES type, the first bitstream further comprises a first ES packet, and the first ES packet comprises the second bitstream, the third bitstream, and the model identifier;
parsing the first bitstream according to the target bitstream type of the first bitstream, to obtain the third bitstream comprises:
reading the third bitstream from the first ES packet; and
the method further comprises:
reading the second bitstream from the first ES packet.

11. The method according to claim 9, wherein the target bitstream type is a type of a bitstream encapsulated according to a target container format;
parsing the first bitstream according to the target bitstream type of the first bitstream, to obtain the third bitstream comprises:
decapsulating the first bitstream according to the target container format, to obtain a second ES packet; and
reading the third bitstream from the second ES packet; and
the method further comprises:
reading the second bitstream from the second ES packet.

12. The method according to claim 9, wherein the target bitstream type is a type of a bitstream encapsulated according to a target container format;
parsing the first bitstream according to the target bitstream type of the first bitstream, to obtain the third bitstream comprises:
decapsulating the first bitstream according to the target container format, to obtain a third ES packet, a fourth ES packet, a type of the third ES packet, and a type of the fourth ES packet; and
reading the third bitstream from the third ES packet, wherein the type of the third ES packet is a preset type; and
the method further comprises:
reading the second bitstream from the fourth ES packet, wherein the type of the fourth ES packet is a media type.

13. The method according to claim 12, wherein the preset type is a metadata type.

14. The method according to claim 9, wherein the target bitstream type is a type of a bitstream encapsulated according to a target container format, the first bitstream further comprises a fourth bitstream and a fifth bitstream, the fifth bitstream comprises the second bitstream, the fourth bitstream comprises the third bitstream, and the model identifier is located in the fourth bitstream or the fifth bitstream;
parsing the first bitstream according to the target bitstream type of the first bitstream, to obtain the third bitstream comprises:
decapsulating the fourth bitstream according to the target container format, to obtain a fifth ES packet and a type of the fifth ES packet; and
reading the third bitstream from the fifth ES packet, wherein the type of the fifth ES packet is a preset type; and
the method further comprises:
decapsulating the fifth bitstream according to the target container format, to obtain a sixth ES packet and a type of the sixth ES packet; and
reading the second bitstream from the sixth ES packet, wherein the type of the sixth ES packet is a media type.

15. The method according to claim 9, wherein the target bitstream type is a type of a bitstream encapsulated according to a target transport protocol, the first bitstream further comprises a sixth bitstream and a seventh bitstream, the seventh bitstream comprises the second bitstream, the sixth bitstream comprises the third bitstream, and the model identifier is located in the sixth bitstream or the seventh bitstream;
parsing the first bitstream according to the target bitstream type of the first bitstream, to obtain the third bitstream comprises:
decapsulating the first bitstream according to the target transport protocol, to obtain the sixth bitstream;
decapsulating the sixth bitstream according to a target container format, to obtain a seventh ES packet and a type of the seventh ES packet; and
reading the third bitstream from the seventh ES packet, wherein the type of the seventh ES packet is a preset type; and
the method further comprises:
decapsulating, according to the target container format, the seventh bitstream that is decapsulated from the first bitstream, to obtain an eighth ES packet and a type of the eighth ES packet; and
reading the second bitstream from the eighth ES packet, wherein the type of the eighth ES packet is a media type.

16. The method according to claim 15, wherein the first bitstream further comprises an index file, the index file comprises index information of the sixth bitstream and index information of the seventh bitstream, and the index information of the sixth bitstream is before the index information of the seventh bitstream; and
decapsulating the first bitstream according to the target transport protocol, to obtain the sixth bitstream comprises:
decapsulating the first bitstream according to the target transport protocol, to obtain the index file and a plurality of bitstreams; and
reading the index information of the sixth bitstream from the index file, and determining the sixth bitstream from the plurality of bitstreams based on the index information of the sixth bitstream.

17. The method according to claim 15, wherein the first bitstream further comprises an index file, and attribute information of an initialization tag in the index file comprises index information of the sixth bitstream; and
decapsulating the first bitstream according to the target transport protocol, to obtain the sixth bitstream comprises:
decapsulating the first bitstream according to the target transport protocol, to obtain the index file and a plurality of bitstreams; and
reading the index information of the sixth bitstream from the attribute information of the initialization tag of the index file, and determining the sixth bitstream from the plurality of bitstreams based on the index information of the sixth bitstream.

18. The method according to claim 10, wherein the reconstructed signal comprises M frames, there are M first ES packets, the M first ES packets comprise N ninth ES packets and M-N tenth ES packets, the ninth ES packet comprises one sub-bitstream and one second bitstream, the tenth ES packet comprises one second bitstream, M and N are positive integers, and M is greater than or equal to N;
reading the third bitstream from the first ES packet comprises:
reading N sub-bitstreams from the N ninth ES packets; and
splicing the N sub-bitstreams to obtain the third bitstream; and
reading the second bitstream from the first ES packet comprises:
reading N second bitstreams from the N ninth ES packets, and using the M-N tenth ES packets as M-N second bitstreams.

19. The method according to claim 2 or any one of claims 9 to 18, wherein obtaining the model information of the decoding model based on the third bitstream comprises:
parsing out the model information from the third bitstream; or
parsing out encoded data of the model information from the third bitstream, and decoding the encoded data of the model information, to obtain the model information.

20. The method according to any one of claims 1 to 19, wherein
the model information comprises model structure information or a model parameter.

21. A decoding apparatus, wherein the apparatus comprises:
a bitstream receiving module, configured to receive a first bitstream, wherein the first bitstream comprises a model identifier and a second bitstream, and the second bitstream is generated based on an encoded signal;
a decapsulation module, configured to obtain model information when a value of the model identifier is a preset identifier value, wherein
the decapsulation module is further configured to perform model reconstruction based on the model information, to obtain a decoding model; and
a decoder, configured to decode the second bitstream based on the decoding model, to obtain a reconstructed signal.

22. An electronic device, comprising:
a memory and a processor, wherein the memory is coupled to the processor; and
the memory stores program instructions, and when the program instructions are executed by the processor, the electronic device is enabled to perform the decoding method according to any one of claims 1 to 20.

23. A chip, comprising one or more interface circuits and one or more processors, wherein the one or more processors receive or send data via the one or more interface circuits, and when the one or more processors execute computer instructions, the step of the method according to any one of claims 1 to 20 is performed.

24. A computer-readable storage medium, wherein the computer-readable storage medium stores a computer program, and when the computer program is run on a computer or a processor, the computer or the processor is enabled to perform the decoding method according to any one of claims 1 to 20.

25. A computer program product, wherein the computer program product comprises computer instructions, and when the computer instructions are executed by a computer or a processor, the step of the method according to any one of claims 1 to 20 is performed.
